# EUROPEAN PATENT APPLICATION

(11) **EP 4 485 374 A2**
(43) Date of publication of application: **01.01.2025**
(21) Application number: 24177344.9
(22) Date of filing: 22.05.2024
(51) Int. Cl.: G06V 10/762, G06V 20/40, G06V 20/52

(54) **INFORMATION PROCESSING PROGRAM, INFORMATION PROCESSING METHOD, AND INFORMATION PROCESSING APPARATUS**

(30) Priority: 26.06.2023 JP 2023104524
(71) Applicant: Fujitsu Limited, Kawasaki-shi, Kanagawa 211-8588 (JP)
(72) Inventor: AOKI, Yasuhiro, Kawasaki-shi, Kanagawa 211-8588 (JP); NAKAYAMA, Osafumi, Kawasaki-shi, Kanagawa 211-8588 (JP)
(74) Representative: Hoffmann Eitle

(57) **Abstract**

An information processing program causes a computer (10) to execute a process including acquiring (21) a video image captured by each of one or more camera devices, specifying (22), by analyzing the acquired video image, a relationship in which a behavior between a plurality of persons who are included in the video image has been identified, and determining (23), based on the specified relationship, whether or not an abnormality has occurred between the plurality of persons outside the image capturing range of each of the camera devices.

## Description

### FIELD

The embodiment discussed herein is related to an information processing program, an information processing method, and an information processing apparatus that identifies a person who conducts an abnormal behavior and the conducted abnormal behavior from a video image.

### BACKGROUND

For example, there is a technology for identifying a person, i.e., a child, who has encountered an abnormality, such as a stray child or an abduction, by image recognition from monitoring video images captured in an inside of any type of facility, such as an inside of a store, performed by a computer, and notifying an alert indicating the abnormality. As a result of this, it is possible to prevent an occurrence of an accident or an affair beforehand.

This type of technology extracts, by using, for example, a machine learning model, bounding boxes (Bboxes) each of which encloses a region including the person by a rectangular box from the video images, and determines whether or not an abnormality has occurred between persons on the basis of positional relationship of both of the Bboxes of persons, such as a parent and a child.

Patent Document 1: Japanese Laid-open Patent Publication No. 2022-165483

However, it is not possible to detect a person who is in a blind spot of a monitoring camera, so that it is easy to accurately determine whether or not an abnormality has occurred between the persons from the video images. Furthermore, the blind spot of the monitoring camera mentioned here may be a blind spot that is generated between image capturing ranges of a plurality of cameras in the case where, for example, different areas have been captured by the plurality of cameras, or may be a blind spot that is generated outside the image capturing range of a single camera, such as an oscillating camera.

Accordingly, it is an object in one aspect of an embodiment of the present invention to provide an information processing program, an information processing method, and an information processing apparatus capable of more accurately determining that an abnormality has occurred between a plurality of persons from a video image.

### SUMMARY

According to an aspect of an embodiment, an information processing program causes a computer to execute a process. The process includes acquiring a video image captured by each of one or more camera devices. The process includes specifying, by analyzing the acquired video image, a relationship in which a behavior between a plurality of persons who are included in the video image has been identified. And the process includes determining, based on the specified relationship, whether or not an abnormality has occurred between the plurality of persons outside the image capturing range of each of the camera devices.

### BRIEF DESCRIPTION OF DRAWINGS

FIG. 1 is a diagram illustrating one example of image capturing performed by monitoring cameras;
FIG. 2 is a diagram illustrating another example of image capturing performed by a monitoring camera;
FIG. 3 is a diagram illustrating a configuration example of an information processing system 1 according to the present embodiment;
FIG. 4 is a diagram illustrating a configuration example of an information processing apparatus 10 according to the present embodiment;
FIG. 5 is a diagram illustrating one example of information stored in a camera installation DB 14 according to the present embodiment;
FIG. 6 is a diagram illustrating one example of information stored in a rule DB 16 according to the present embodiment;
FIG. 7 is a diagram illustrating one example of a process of specifying a relationship performed on the basis of a scene graph according to the present embodiment;
FIG. 8 is a diagram explaining the point at issue about generation of the scene graph;
FIG. 9 is a diagram illustrating one example of a process of generating an Attention map according to the present embodiment;
FIG. 10 is a diagram illustrating one example of a NN configuration for relationship estimation according to the present embodiment;
FIG. 11 is a diagram illustrating one example of a process of extracting an image feature according to the present embodiment;
FIG. 12 is a diagram illustrating one example of object detection according to the present embodiment;
FIG. 13 is a diagram illustrating one example of a process of generating a pair feature value according to the present embodiment;
FIG. 14 is a diagram illustrating one example of relationship feature extraction according to the present embodiment;
FIG. 15 is a diagram illustrating one example of relationship estimation according to the present embodiment;
FIG. 16 is a diagram illustrating one example of skeleton information according to the present embodiment;
FIG. 17 is a diagram illustrating one example of pose determination of the entire body according to the present embodiment;
FIG. 18 is a diagram illustrating one example of detection of a motion of each of parts according to the present embodiment;
FIG. 19 is a diagram illustrating one example of calculation of a projective transformation coefficient according to the present embodiment;
FIG. 20 is a diagram illustrating one example of conversion from an image coordinate system to a floor map coordinate system according to the present embodiment;
FIG. 21 is a flowchart illustrating the flow of an abnormality occurrence determination process according to the present embodiment;
FIG. 22 is a flowchart illustrating the flow of a relationship estimation process according to the present embodiment; and
FIG. 23 is a diagram illustrating an example of a hardware configuration of the information processing apparatus 10.

### DESCRIPTION OF EMBODIMENTS

Preferred embodiments of the present invention will be explained with reference to accompanying drawings. Furthermore, the present embodiment is not limited to the embodiments. In addition, each of the embodiments can be used in any appropriate combination as long as they do not conflict with each other.

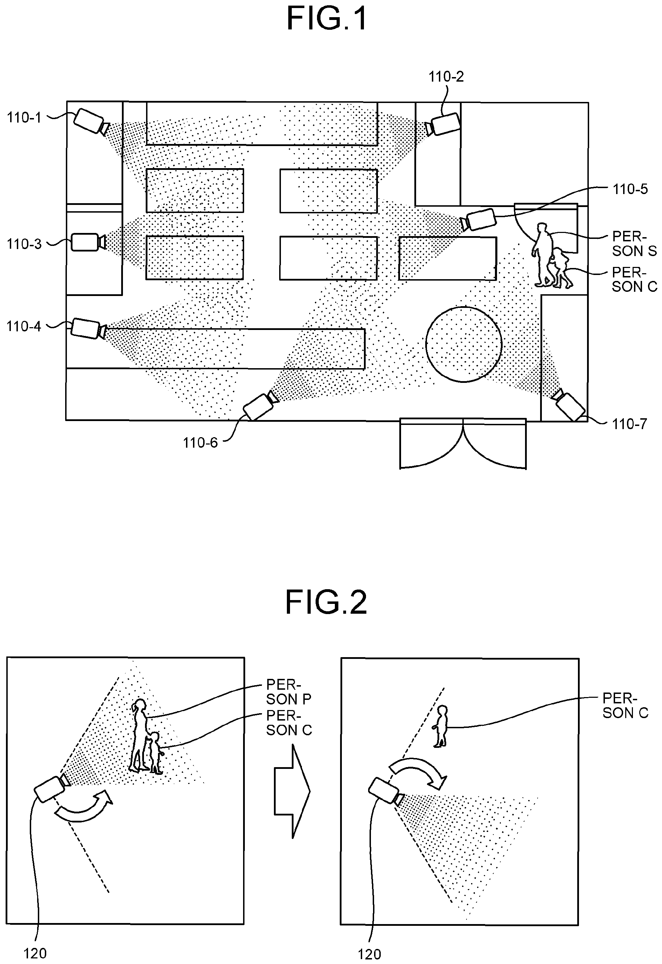

First, capturing of images performed by monitoring cameras and a blind spot of an image capturing range will be explained. FIG. 1 is a diagram illustrating one example of image capturing performed by monitoring cameras. FIG. 1 illustrates an example of a case in which images of an inside of any type of facility, such as an inside of a store, are captured by camera devices 110-1 to 110-7 (hereinafter, collectively referred to as a "camera device 110") that are a plurality of monitoring cameras. Furthermore, in FIG. 1, it is assumed that the camera device 110 is a fixed camera and an approximate image capturing range of the camera device 110 is the portions that are indicated by halftone dots.

Although depending on the number of camera devices 110 that are installed and depending on a scale of the facility that corresponds to the image capturing target, a blind spot is generated to no small extent in the image capturing range of the camera device 110. In FIG. 1, for example, the position in which a person S and a person C are present is a blind spot, among the image capturing ranges, that is not able to be captured in any of the image capturing ranges of the camera devices 110-1 to 110-7. For example, even if an abnormality occurs between the person S and the person C at such a position, with a conventional method of detecting a person from a video image captured by the camera device 110 and performing image recognition, it is difficult to determine whether or not an abnormality has occurred between the person S and the person C. Here, the abnormality between the person S and the person C is a case in which, for example, the person C is a child, and the person S is an adult who has no connection with the person C and is attempting to take the person C away in order to abduct the person C, or the like.

FIG. 2 is a diagram illustrating another example of image capturing performed by a monitoring camera. Similarly to FIG. 1, FIG. 2 also illustrates a camera device 120 that corresponds to a monitoring camera that captures images of an inside of any type of facility, such as an inside of a store, the camera device 120 is what is called an oscillating camera. Accordingly, as illustrated in FIG. 2, the image capturing range of the camera device 120 moves in the range illustrated by, for example, the broken line.

The image capturing range of the camera device 120 moves in this way, so that the position that has been captured at one moment becomes an outside the image capturing range depending on a timing and consequently turns into a blind spot. For example, on the left side of FIG. 2, the person P and the person C are captured in the image capturing range of the camera device 120, but, on the right side of FIG. 2, it is not possible to capture the person C as a result of a move of the image capturing range. For example, at a timing of a case illustrated on the right side of FIG. 2, even if an abnormality occurs between the person P and the person C, similar to the case of the plurality of camera devices 110 illustrated in FIG. 1, with the conventional method, it is difficult to determine whether or not an abnormality has occurred between the person P and the person C. Here, the abnormality between the person S and the person C is a case in which, for example, the person C is a child, the person P is a parent of the person C, and the person C becomes lost after being separated from the person P.

### Overall configuration

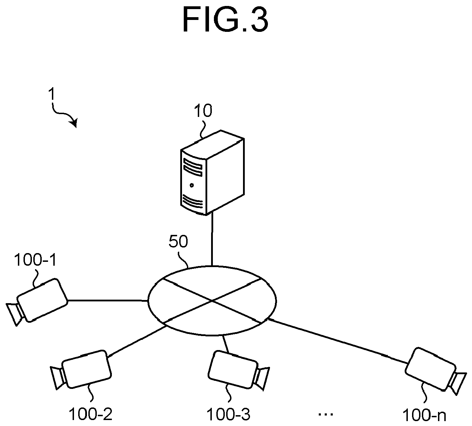

In the following, an information processing system for implementing the present embodiment will be described. FIG. 3 is a diagram illustrating a configuration example of the information processing system 1 according to the present embodiment. As illustrated in FIG. 3, the information processing system 1 is a system in which the information processing apparatus 10 and the camera devices 100-1 to 100-n (n is an arbitrary natural number) are connected so as to be able to communicate with each other via a network 50. Moreover, hereinafter, the camera devices 100-1 to 100-n are collectively referred to as a "camera device 100".

Various kinds of communication networks, such as an intranet and the Internet, that is used in, for example, an inside of any type of facility, such as an inside of a store, may be used for the network 50 irrespective of a wired or wireless manner. Furthermore, instead of a single network, the network 50 may be constituted of, for example, an intranet and the Internet by way of a network device, such as a gateway, or another device (not illustrated). Furthermore, an expression of an "inside of a facility" is not limited to indoors, but may include outdoors within the site of the facility.

The information processing apparatus 10 is an information processing apparatus, such as a desktop personal computer (PC) a notebook PC, or a server computer, that is installed in, for example, an inside of any type of facility, such as an inside of a store, and that is used by a security guard or the like. Alternatively, the information processing apparatus 10 may be a cloud computer device that is managed by a service provider who provides a cloud computing service.

The information processing apparatus 10 receives, from the camera device 100, a video image obtained by capturing by, for example, the camera device 100, a predetermined image capturing range of an inside of any type of facility, such as an inside of a store. Furthermore, the video image is constituted by, in a precise sense, a plurality of captured images, that is, a series of frames of a moving image, that are captured by the camera device 100.

Furthermore, the information processing apparatus 10 extracts persons who are in an inside of any type of facility, such as an inside of a store, from the video images that are captured by the camera device 100 by using, for example, an existing object detection technique. Moreover, a process of extracting a person from a video image may be a process of extracting a bounding box (Bbox) that encloses, for example, a region including the person by a rectangular box from the video image. Furthermore, the information processing apparatus 10 specifies the relationship in which an interaction between persons indicating that, for example, a person and a person are holding hands with each other, walking together, talking with each other, or the like, has been identified.

In addition, the information processing apparatus 10 determines whether or not an abnormality has occurred between a plurality of persons on the basis of, for example, the specified relationship between the plurality of persons. The abnormality between the plurality of persons mentioned here indicates, for example, a stray child, an abduction, or the like, and, in particular, the information processing apparatus 10 determines, on the basis of the specified relationship between the plurality of persons, an abnormality has occurred between the plurality of persons outside the image capturing range of the camera device 100.

Then, if the information processing apparatus 10 determines that the abnormality has occurred between, for example, the plurality of persons, the information processing apparatus 10 gives a notification of an alert. Moreover, the alert is only a warning, an occurrence of the abnormality may include, for example, a possibility of an occurrence of the abnormality. Furthermore, the alert may be, for example, an output of a sound, a notification of a message displayed on a screen. Furthermore, The notification destination of the alert may be, for example, an output device included in the information processing apparatus 10, may be an external device, may be another output device that is connected to the information processing apparatus 10 so as to be able to communicate each other via the network 50, or the like.

Furthermore, on the basis of, for example, an installation location of the camera device 100 that has captured the video image in which the relationship between the plurality of persons has been specified, or the like, the information processing apparatus 10 may specify a location in which an abnormality has occurred and restricts the notification destination of the alert. Moreover, to restrict the notification destination of the alert indicates that a notification of the alert is restricted to, for example, an information processing terminal carried by a security guard who is present in the vicinity of the location in which the abnormality has occurred, a PC that is installed in the vicinity of the location in which the abnormality has occurred, or the like.

Then, the security guard or the like who is in an inside of any type of facility, such as an inside of a store, receives the notification of the store, and is able to check a location in which the abnormality has occurred or the person who has encountered the abnormality, is able to prevent an occurrence of a stray child, an abduction, or the like beforehand by calling out or paying attention to the person who has encountered the abnormality, and is able to solve the problem.

Furthermore, in FIG. 3, the information processing apparatus 10 is illustrated as a single piece of computer, the information processing apparatus 10 may be a plurality of computers that are constituted in a distributed computing system.

The camera device 100 is a monitoring camera that is installed in, for example, an inside of any type of facility, such as an inside of a store. The camera device 100 may be, for example, the camera device 110 corresponding to the plurality of monitoring cameras, the camera device 120 that is the oscillating camera, or the like as described above with reference to FIG. 1 and FIG. 2. Moreover, in FIG. 3, the plurality of camera devices 100 are illustrated, but, depending on a scale of the image capturing range, or, in the case where the camera device 100 is an oscillating camera or the like, the number of camera devices 100 may be one. Furthermore, the camera device 100 transmits, for example, the captured video image to the information processing apparatus 10.

Functional configuration of information processing apparatus 10

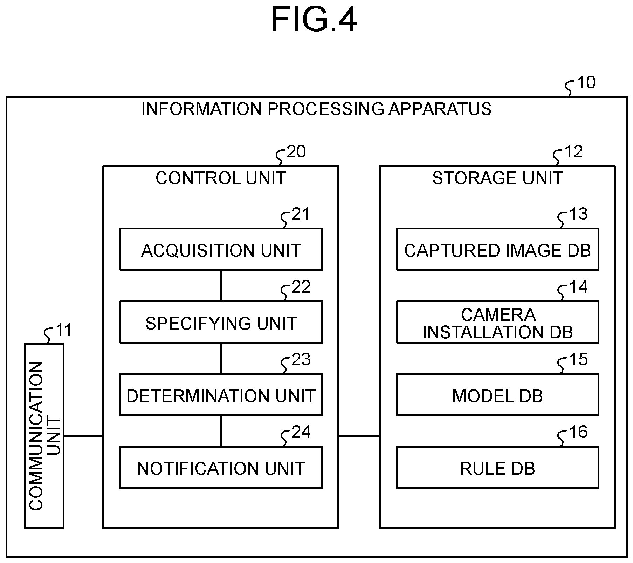

In the following, a functional configuration of the information processing apparatus 10 will be described. FIG. 4 is a configuration example of the information processing apparatus 10 according to the present embodiment. As illustrated in FIG. 4, the information processing apparatus 10 includes a communication unit 11, a storage unit 12, and a control unit 20.

The communication unit 11 is a processing unit that controls communication between another device, such as the camera device 100, and is a communication interface, such as a network interface card.

The storage unit 12 has a function for storing various kinds of data and programs executed by the control unit 20 and is implemented by, for example, a storage device, such as a memory or a hard disk. The storage unit 12 stores therein a captured image DB 13, a camera installation DB 14, a model DB 15, the rule DB 16, and the like. Moreover, the DB is an abbreviation of a database.

The captured image DB 13 stores therein a plurality of captured images that are a series of frames captured by the camera device 100. The plurality of captured images captured by the camera device 100, that is, the video images are transmitted from the camera device 100 as needed, received by the information processing apparatus 10, and then stored in the captured image DB 13.

The camera installation DB 14 stores therein information for specifying the location in which, for example, each of the camera devices 100 is installed. The information stored here may be set in advance by, for example, an administrator or the like of the information processing system 1.

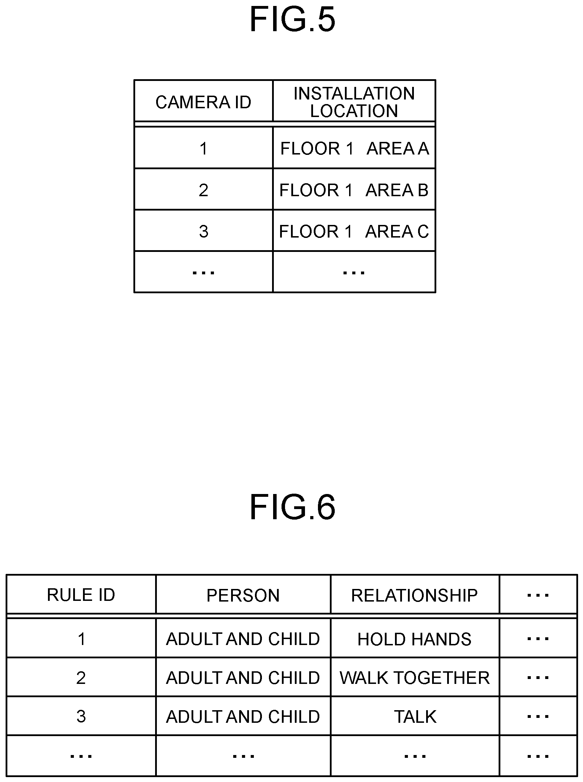

FIG. 5 is a diagram illustrating one example of the information stored in the camera installation DB 14 according to the present embodiment. As illustrated in FIG. 5, in the camera installation DB 14, the pieces of information on, for example, "a camera ID, an installation location", or the like are stored in an associated manner. In the "camera ID" stored here, for example, information, such as an identifier, for uniquely identifying each of the camera devices 100 is set, and, in the "installation location", for example, information for specifying the locations in each of which the camera device 100 is installed. Moreover, in the case where only a single piece of the camera device 100 is installed, the camera installation DB 14 does not need to be included in the storage unit 12.

The model DB 15 stores therein the information related to a machine learning model that is used to specify, from, for example, the video image captured by the camera device 100, a region that includes a person and a relationship between the plurality of persons, and a model parameter for building the machine learning model. The machine learning model is generated by machine learning performed by using a video image, that is, a captured image, captured by, for example, the camera device 100 as input data, and by using the region that includes the person and type of the relationship between the plurality of persons as a correct answer label. Moreover, the type relationship between the plurality of persons may be a case in which, for example, a person and a person are holding hands with each other, walking together, talking with each other, or the like, but is not limited to these cases. Furthermore, the region that includes the person may be a bounding box (Bbox) that encloses the region by a rectangular box on, for example, a captured image.

Furthermore, the model DB 15 stores therein the information related to a machine learning model that is used to acquire the type of an object that includes a person and that is used to generate a scene graph from, for example, a video image and a relationship between the objects, and a model parameter for building the model. Moreover, the type of the object that is used generate the scene graph is sometimes referred to as a "class", and the relationship between the objects is sometimes referred to as a "relation". Furthermore, the machine learning model is generated by machine learning performed by using the video images, that is, a captured images, captured by the camera device 100 as input data, and by using the location (Bbox) of the object included in the captured image, the type of the object, and the relationship between the objects as a correct answer label.

Furthermore, the model DB 15 stores therein the information related to a machine learning model that is used to generate, for example, an Attention map that will be described later, and a model parameter for building the model. The machine learning model is generated by being trained by using, for example, a feature value of the object that includes the person detected from the captured image as input data, and by using an important region of the image as a correct answer label. Moreover, a process of training and generating the various kinds of machine learning models may be performed by the information processing apparatus 10, or may be performed by another information processing apparatus.

The rule DB 16 stores therein information related to a rule for determining that, for example, an abnormality has occurred between the plurality of persons. The information stored here may be set by, for example, an administrator or the like of the information processing system 1.

FIG. 6 is a diagram illustrating one example of the information that is stored in the rule DB 16 according to the present embodiment. As illustrated in FIG. 6, in the rule DB 16, the pieces of information on, for example, "a rule ID, a person, a relationship" or the like are stored in an associated manner. In the "rule ID" stored here, for example, information, such as an identifier, for uniquely identifying each of the rules is set. Furthermore, in the "person", for example, the type of the plurality of persons, such as "an adult and a child" or the like is set. Furthermore, in the "relationship", for example, the type of the relationship between the plurality of persons, such as holding hands with each other, walking together, or talking with each other, is set.

For example, in the case where the plurality of persons have been detected from the video image, the plurality of persons who are set to the "person" stored in the rule DB 16 indicates the relationship that is set to the "relationship", the information processing apparatus 10 is able to determine that there is a possibility that an abnormality occurs between the plurality of persons. More specifically, for example, as indicated by the rule ID of 1 illustrated in FIG. 6, it is assumed that the plurality of persons detected from the video image are "an adult and a child", and it is assumed that the relationship between the plurality of persons is "hold hands". In this case, the information processing apparatus 10 is able to determine that there is a possibility that an abnormality occurs between "the adult and the child" who indicates the relationship of, for example, "hold hands".

Then, it is assumed that, for example, the child who is associated with "the adult and the child" and who has indicated the relationship of "hold hands" indicates, in a video image that is chronologically subsequent to the subject video image, the relationship that has been set to the item of the "relationship" that is stored in the rule DB 16 and that indicates "hold hands", "walking together", or the like with another adult. In this case, the information processing apparatus 10 determines that an abnormality, such as taking away for an abduction, has occurred between, for example, the plurality of persons, that is, the adult and the child, detected from the video image, and is able to send a notification of an alert. Moreover, in such a case of determination, for example, even in a case in which a mother and a child are holding hands, and after that, the child holds hands with the child's grandfather, the information processing apparatus 10 may possibly determine that an abnormality has occurred. However, a state in which the abnormality has occurred may include a state of a possibility of an occurrence of an abnormality, and, for example, it is possible to prevent an occurrence of an abduction or the like beforehand by checking the location of the occurred abnormality, the person encountered the abnormality, or the like by the security guard or the like who has received the notification of the alert.

Furthermore, it is assumed that, for example, the child who is associated with "the adult and the child" and who has indicated by the relationship of "hold hands" is alone after the relationship has been cancelled out by a video image that is chronologically to the subject video image. In this case, the information processing apparatus 10 is able to determine that an abnormality, such as a stray child, has occurred between the plurality of persons, that is, the adult and the child, who has been detected from, for example, the video image, and is able to send a notification of an alert.

Furthermore, the above described information stored in the storage unit 12 is one example, and the storage unit 12 is able to various kinds of information other than the above described information.

The control unit 20 is a processing unit that manages the entirety of the information processing apparatus 10 and is, for example, a processor or the like. The control unit 20 includes an acquisition unit 21, a specifying unit 22, a determination unit 23, and a notification unit 24. Moreover, each of the processing units is one example of an electronic circuit included in the processor or one example of a process executed by the processor.

The acquisition unit 21 acquires, from the captured image DB 13, a video image in which an inside of any type of facility, such as an inside of a store, has been captured by, for example, each of one or more of the camera devices 100. Moreover, the video image captured by each of the camera devices 100 is transmitted by the respective camera devices 100 to the information processing apparatus 10 as needed, are received by the information processing apparatus 10, and are stored in the captured image DB 13.

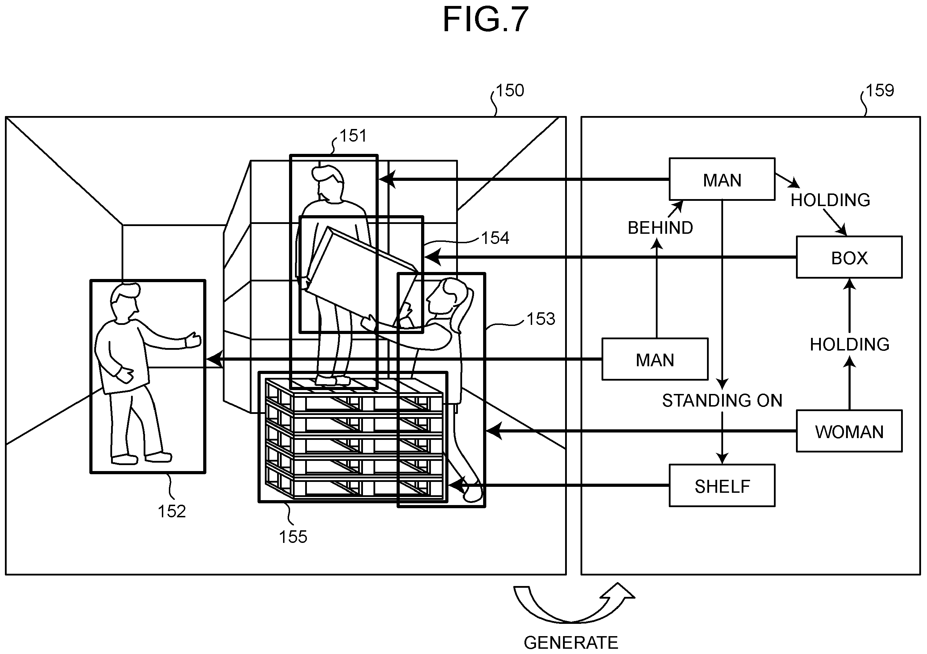

The specifying unit 22 specifies, by analyzing, for example, the video image acquired by the acquisition unit 21, the relationship in which an interaction between the plurality of persons who are included in the video image has been identified. Moreover, for example, the plurality of persons included in the video image may be present in the respective regions that include the respective persons, such as a first region that includes a person A, and a second region that includes a person B. Furthermore, the subject region may be, for example, a bounding box (Bbox). Furthermore, the specified relationship between the plurality of persons may include the type of the relationship indicating that, for example, a person and a person are holding hands with each other, walking together, talking with each other, or the like. Furthermore, the specifying process of the relationship in which the interaction between the plurality of persons has been identified may include a process of generating a scene graph in which the relationship has been specified for each of the persons included in the video image by inputting, for example, the video image acquired by the acquisition unit 21 to the machine learning model. A process of generating the scene graph will be more specifically explained with reference to FIG. 7.

FIG. 7 is a diagram illustrating one example of a process of illustrating a process of specifying a relationship on the basis of a scene graph according to the present embodiment. It is assumed that a captured image 150 illustrated in FIG. 7 is, for example, a single frame of a video image that has been captured by the camera device 100. The specifying unit 22 detects objects including persons using an existing detection algorithm from, for example, the captured image 150, estimates the relationship between each of the objects, and generates a scene graph 159 that represents each of the objects and the relationship between each of the objects, that is, contexts. Here, the existing detection algorithm is, for example, You Only Look Once (YOLO), Single Shot Multibox Detector (SSD), Region Based Convolutional Neural Networks (RCNN), or the like.

In the example illustrated in FIG. 7, at least two males (man) indicated by Bboxes 151 and 152, a female (woman) indicated by a Bbox 153, a box (box) indicated by a Bbox 154, a shelf (shelf) indicated by a Bbox 155 are detected from the captured image 150. Then, the specifying unit 22 cuts out a Bbox region of each of the objects including the persons from, for example, the captured image 150, extracts a feature value of each of the regions, estimates the relationship between each of the objects from the paired feature value between the objects (Subject, Object), and generates the scene graph 159. In FIG. 7, the scene graph 159 indicates the relationship in which, for example, the male (man) indicated by the Bbox 151 is standing on the shelf (shelf) indicated by the Bbox 155 (standing on). Furthermore, for example, the relationship that is with respect to the male indicated by the Bbox 151 and that is indicated by the scene graph 159 is not limited to one. As illustrated in FIG. 7, in the scene graph 159, in addition to the (shelf), all of the relationships estimated for the male (man) indicated by the Bbox 151 are indicated including the relationship in which the male (man) indicated by the Bbox 151 is present behind the male indicated by the Bbox 152 (behind), the relationship in which the male (man) indicated by the Bbox 151 is holding a box (box) indicated by a Bbox 154 (holding), and the like. In this way, the specifying unit 22 is able to specify the relationships among the plurality of persons included in the video image by generating the scene graph.

However, the point at issue is also present in the scene graph, so that, by solving the point at issue, the specifying unit 22 is able to further accurately specify the relationships between the plurality of persons included in the video image.

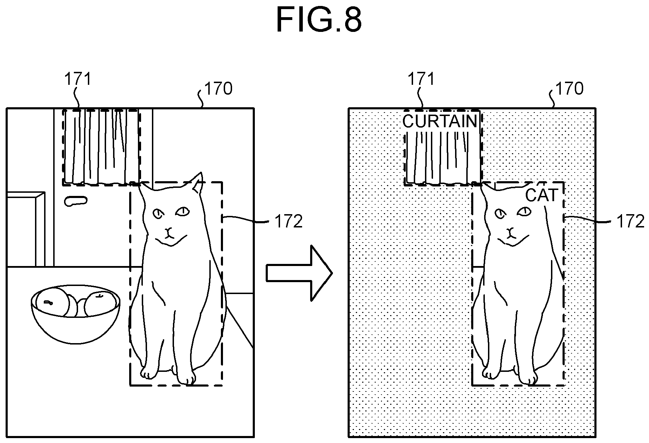

FIG. 8 is a diagram illustrating the point at issue of generating the scene graph. When the scene graph is generated, for example, as illustrated in FIG. 8, each of the objects is cut out from a captured image 170, information that is important from the viewpoint of a context and that is present outside the regions of a Bbox 171 of a Subject and a Bbox 172 of an Object is sometimes overlooked. More specifically, as indicated on the right side of FIG. 8, each of the regions corresponding to the Bbox 171 of a curtain (curtain) and the Bbox 172 of a cat (cat) are cut out, the information on the other regions is not used at the time of estimation of the relationship between the cat and the curtain. Accordingly, even if important information is present, the important information is overlooked at the time of the estimation of the relationship between the cat and the curtain. For example, it is possible to estimate that the curtain is present behind the cat by looking at the objects that are present around both of the cat and the curtain or looking at the structure of the room, but, in a general process of generating a scene graph, when the relationship between the cat and the curtain is estimated, information on the objects that are present around the cat and the curtain is not used. Accordingly, when the relationship between the objects, it is possible to more accurately specify the relationship by also using information on the circumference of the objects. For example, in the example illustrated in FIG. 8, from the captured image 170, it is possible to estimate the relationship indicating that, apples are present beside the cat, so that a table is highly likely to be placed below both of the cat and the apples, and a curtain is hang on a door, so that the curtain is located behind (behind) the cat.

Accordingly, in the present embodiment, a region that is important in terms of a context is adaptively extracted from the entire of the image for each of the Subject and the Object that are targeted for the relationship to be estimated, and then the targeted relationship is recognized. Extraction of the important region for the recognition of the relationship is implemented by generating a map (hereinafter, referred to as an "Attention map") that takes values of, for example, 0 to 1 in accordance with a degree of importance.

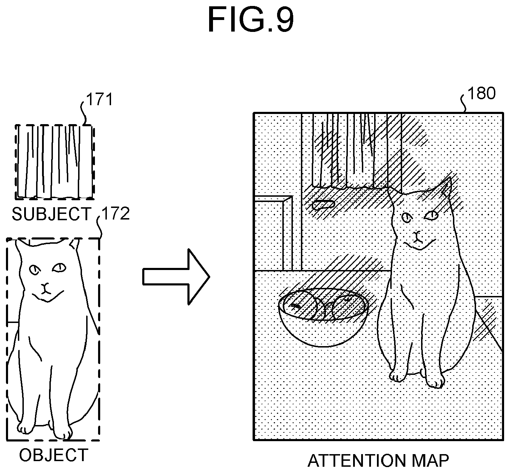

FIG. 9 is a diagram illustrating one example of a process of generating an Attention map according to the present embodiment. As illustrated in FIG. 9, the specifying unit 22 generates an Attention map 180 that represents an important region other than the regions of the Bboxes 171 and 172 at the time of estimation of the relationship between, for example, the curtain that is the Subject and the cat that is the Object, and uses the generated Attention map 180 to estimate the relationship. The Attention map 180 is generated by using a machine learning model that has been generated by training by using, for example, the feature value of the object detected from the captured image as input data and by using the important region in the image as a correct answer label such that a recognition rate of the relationship between the objects is high. Furthermore, regarding the Attention map 180, for example, as illustrated in FIG. 9, at the time of the estimation of the relationship between the Subject and the Object, the degree of importance of the important region is represented by a color, a contrasting density, or the like. Moreover, it is not possible to recognize in advance the place of the region that is important in terms of the context in the captured image, so that the specifying unit 22 generates the Attention map 180 assuming, for example, the entire image as the target. As a result of this, the specifying unit 22 is able to more accurately extract the region that is important in terms of the context, and, furthermore, more accurately specify the relationships between the objects.

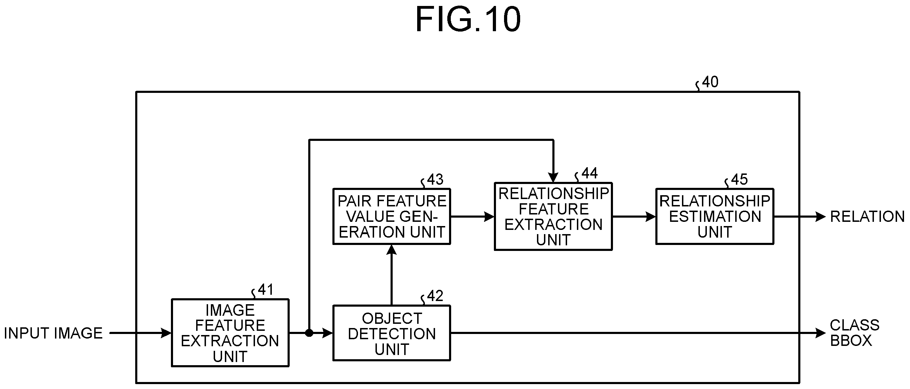

The estimation of the relationship between each of the objects performed by using the Attention map 180 will be more specifically described with reference to FIGS. 10 to 15. The estimation of the relationship between each of the objects performed by using the Attention map 180 may be performed by, for example, a neural network (NN) .

FIG. 10 is a diagram illustrating one example of a NN configuration for relationship estimation according to the present embodiment. As illustrated in FIG. 10, a NN 40 for estimating the relationship between each of the objects performed by using the Attention map 180 includes, for example, an image feature extraction unit 41, an object detection unit 42, a pair feature value generation unit 43, a relationship feature extraction unit 44, and a relationship estimation unit 45. For example, if a video image in which a certain scene is captured, that is, a captured image, is input, the NN 40 performs a process performed by the image feature extraction unit 41, and then outputs a Bbox of an object detected by the object detection unit 42 and a type (class) of the object. Furthermore, the NN 40 outputs a relationship between each of the objects that have been estimated by the relationship estimation unit 45 and that have been detected by the object detection unit 42 (relation). The process performed by each of the processing units that are included in the NN 40 having the above described configuration will be described for each process.

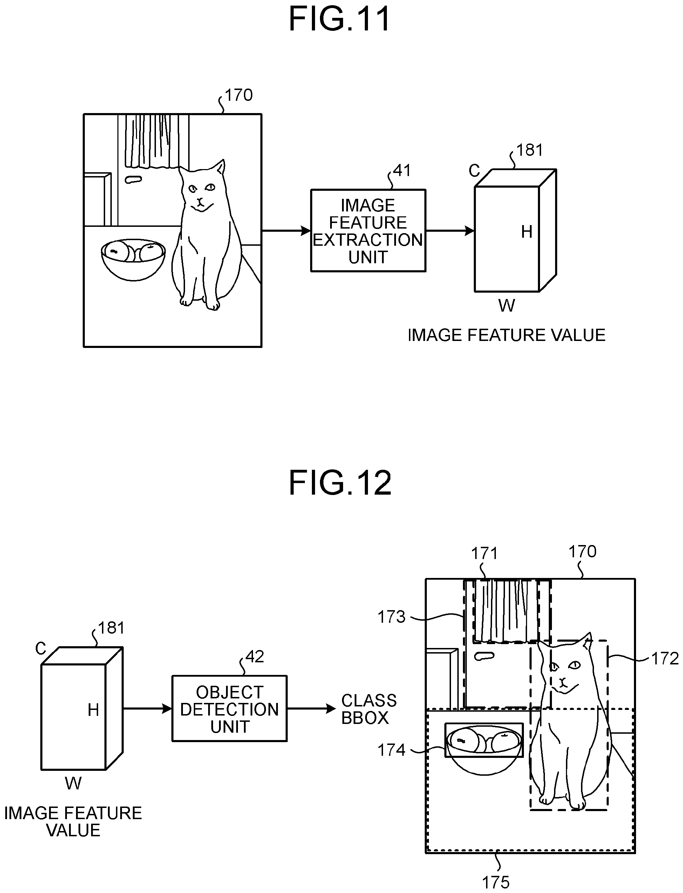

First, feature extraction that is performed from the captured image by the image feature extraction unit 41 will be described. FIG. 11 is a diagram illustrating one example of a process of extracting an image feature according to the present embodiment. As illustrated in FIG. 11, the image feature extraction unit 41 extracts, for example, an image feature value 181 represented by a C channel from the captured image 170 represented by an RGB 3-channel. Moreover, the image feature extraction unit 41 may be constituted by, for example, a convolutional neural network (CNN), a Transformer, or the like that is an existing technology. Furthermore, in the CNN or the Transformer, a Classification task or the like has been trained in advance by using a large scale image data set, such as ImageNet, may be used. Furthermore, in general, a width W and a height H of the image feature value is lower than that of the input image due to a CNN or Pooling process, that is, in the example illustrated in FIG. 11, lower than the width and the height of the captured image 170.

In the following, object detection performed by the object detection unit 42 from an image feature value will be described. FIG. 12 is a diagram illustrating one example of object detection according to the present embodiment. As illustrated in FIG. 12, the object detection unit 42 receives, for example, the image feature value 181 that has been extracted by the image feature extraction unit 41, and then, outputs the Bboxes 171 and 172 and Bboxes 173 to 175 of the respective objects included in the captured image 170 and also outputs a class that indicates the type of each of the objects. Moreover, in the example illustrated in FIG. 12, each of the Bboxes 171 to 175 is denoted by a bbox. Furthermore, as an output example, the object detection unit 42 is able to depict, for example, as illustrated on the right side of FIG. 12, each of the Bboxes 171 to 174 of the respective objects detected in the captured image in a superimposed manner and is able to output the obtained result. Furthermore, a class that indicates a type of each of the objects, such as a curtain (curtain) and a cat (cat), may be output in the vicinity of each of the Bboxes.

Furthermore, it is possible to represent the rectangular box of the Bbox by four real values by indicating, for example, an upper left coordinates of the rectangular box as (x₁, y₂), a lower right coordinates of the rectangular box as (x₂, y₂), and the like. Furthermore, the class that is output from the object detection unit 42 is a probability value indicating that, for example, the object that has been detected by the Bbox is an object of the detection target that is determined in advance. More specifically, for example, in the case where the objects corresponding to the detection targets are {cat, table, car} (a cat, a table, and a car), in the example illustrated in FIG. 12, the class of the Bbox 172 corresponding to the cat becomes a probability value of each of the objects corresponding to the respective detection targets, such as (0.9, 0.1, 0.2). In other words, the class in this case indicates that the probability that each of the detected object is a cat (cat), a table (table), a car (car) is 0.9, 0.1, and 0.2, respectively. Moreover, the object detection unit 42 may be constituted by, for example, Faster Region Based Convolutional Neural Networks (R-CNN), Mask R-CNN, Detection Transformer (DETR), or the like that is a NN for object detection included in an existing technology.

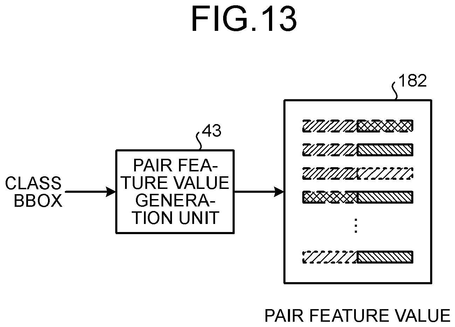

In the following, a paired feature value of each of the detected objects performed by the pair feature value generation unit 43 will be described. FIG. 13 is a diagram illustrating one example of a process of generating a pair feature value according to the present embodiment. As illustrated in FIG. 13, the pair feature value generation unit 43 extracts, for each object, a feature value of each of the detected object on the basis of, for example, the object detected by the object detection unit 42, that is, on the basis of the output class and the output Bbox. At this time, the pair feature value generation unit 43 is able to use RoIAlign or the like in Mask R-CNN. Furthermore, in the case where the object detection unit 42 is constituted by DETR, it is possible to use a feature value of each of the objects that are output from a Transformer decoder without any change. Furthermore, the feature value to be extracted may be a real number vector constituted by, for example, 256 dimensions for each object.

Then, the pair feature value generation unit 43 performs pairing on the combination of all of the detected objects by using one of the paired objects as a Subject and the other of the paired objects as an Object. A pair feature value 182 that is indicated on the right side of FIG. 13 is a list of paired feature values of each of the Subject and the Object. Furthermore, the pair feature value generation unit 43 may transform, in order to adjust the number of dimensions of the pair feature value 182, the feature values of the Subject and the Object that have been subjected to the pairing by using MLP (Multi-Layer Perceptron) that is an existing technology.

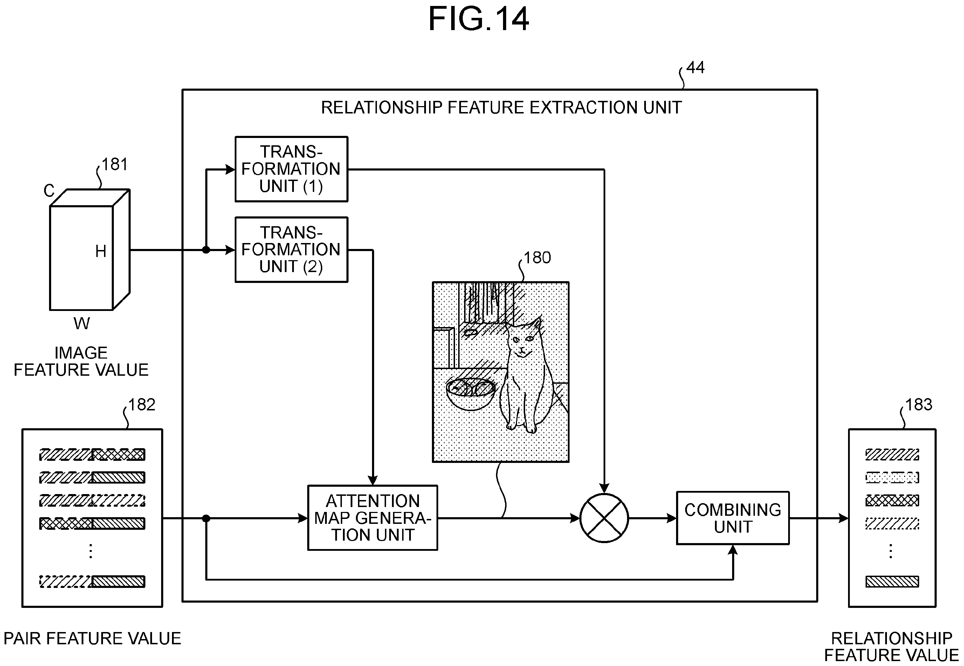

In the following, a process of extracting a feature value that is performed by the relationship feature extraction unit 44 and that indicates the relationship between the detected and paired objects will be described. FIG. 14 is a diagram illustrating one example of relationship feature extraction according to the present embodiment. As illustrated in FIG. 14, the relationship feature extraction unit 44 includes, for example, a transformation unit (1), a transformation unit (2), an Attention map generation unit, and a combining unit.

First, as illustrated in FIG. 14, the relationship feature extraction unit 44 transforms, by using the transformation unit (1) and the transformation unit (2), the image feature value 181 extracted by the image feature extraction unit 41 in order to use the image feature value 181 in a subsequent process. Each of the transformation unit (1) and the transformation unit (2) may be implemented by, for example, Multi-Layer Perceptron (MLP), or the like. Furthermore, in the example illustrated in FIG. 14, the transformation unit (1) and the transformation unit (2) are implemented by the respective MLPs having different weights, so that the transformation units are separately provided as the transformation unit (1) and the transformation unit (2).

Then, the relationship feature extraction unit 44 generates, by the Attention map generation unit, the Attention map 180 by taking, for each line included in the pair feature value 182, a correlation between the pair feature value 182 generated by the pair feature value generation unit 43 and the image feature value that has been transformed by the transformation unit (1). Moreover, the term of for each line included in the pair feature value 182 means that for each pair of the Subject and the Object. Furthermore, after the relationship feature extraction unit 44 has taken the correlation between the pair feature value 182 and the image feature value that has been transformed by the transformation unit (1), the relationship feature extraction unit 44 may transform the Attention map 180 by performing MLP or Layer normalization.

Here, correlation processing between one of the pair feature values 182 and the image feature value that has been transformed by the transformation unit (1) will be more specifically described. Moreover, it is assumed that the pair feature value 182 has been adjusted by the C dimensional vector in the preceding process. Furthermore, it is assumed that the image feature value that has been transformed by the transformation unit (1) is a C dimensional tensor with H × W array in a channel direction. Furthermore, by paying attention on a certain pixel (x, y) associated with the image feature value transformed by the transformation unit (1), and this pixel is defined as an attention pixel. The attention pixel corresponds to 1 × 1 × C, so that the attention pixel can be recognized as the C dimensional vector. Then, the Attention map generation unit calculates a correlation value (scalar) by taking a correlation between the C dimensional vector of the attention pixel and the pair feature value 182 that has been adjusted to the C dimensional vector. As a result of this, the correlation value at the attention pixel (x, y) has been determined. The Attention map generation unit performs this process on all of the pixel, and generates the Attention map 180 with a size of H × W × 1.

Then, the relationship feature extraction unit 44 extracts the feature values of an important region included in the entire image corresponding to the pairs of the Subject and the Object by taking a weighted sum by multiplying the generated Attention map 180 by each of the image feature values that have been transformed by the transformation unit (2). Moreover, the weighted sum is taken from the entire image, so that the feature value obtained from the weighted sum corresponds to a C dimensional feature value with respect to a single pair of the Subject and the Object.

In addition, the weighted sum between the Attention map 180 and each of the image feature values that have been transformed by the transformation unit (2) will more specifically be described. Moreover, it is assumed that the image feature value transformed by the transformation unit (2) is a tensor with H × W × C array. First, the relationship feature extraction unit 44 multiplies the Attention map 180 by each of the image feature values that have been transformed by the transformation unit (2). At this time, the Attention map 180 is represented by the size of H × W × 1, so that the channel is copied to the C dimension. Furthermore, the relationship feature extraction unit 44 adds all of the C dimensional vectors of the respective pixels to the value obtained from the multiplication. As a result of this, a single piece of the C dimensional vector is generated. In other words, a single piece of the C dimensional vector associated with a single piece of the Attention map 180 is generated. Furthermore, in practice, the number of Attention maps 180 to be generated corresponds to the number of pair feature values 182, so that the number of C dimensional vectors to be generated also corresponds to the number of pair feature values 182. As a result of the processes described above, the relationship feature extraction unit 44 accordingly takes the weighted sum based on the Attention maps 180 with respect to the image feature values that have been transformed by the transformation unit (2).

Then, the relationship feature extraction unit 44 combines, by using the combining unit, the feature values that are included in the important region and that have been extracted by the respective Attention maps 180 with the pair feature values 182 that have been generated by the pair feature value generation unit 43, and outputs the combined result as a relationship feature value 183. More specifically, the relationship feature extraction unit 44 is able to use the values obtained by concatenating the feature values included in the important region with the pair feature values 182 in a dimensional direction. Furthermore, after the relationship feature extraction unit 44 has concatenated the feature values included in the important region with the pair feature values 182, the relationship feature extraction unit 44 may transform, by performing MLP or the like, each of the feature values that have been concatenated to adjust the number of dimensions.

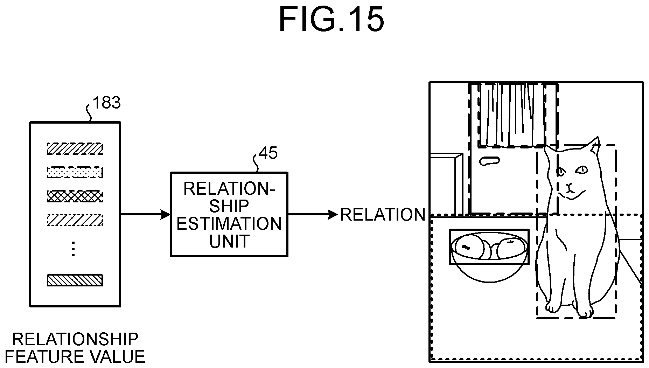

In the following, a process of estimating the relationship between each of the pairs of the Subject and the Object performed by the relationship estimation unit 45 will be described. FIG. 15 is a diagram illustrating one example of the process of estimating the relationship according to the present embodiment. The relationship estimation unit 45 receives the relationship feature values 183 that have been output from the relationship feature extraction unit 44, and outputs the relationship (relation) corresponding to each of the pairs of the Subject and the Object. Moreover, the relationship estimation unit 45 may be constituted by, for example, the MLP, the Batch normalization, or the like that is an existing technology. Furthermore, the output relationship is a probability value indicating the relationship that is targeted for estimation and that is determined in advance. Specifically, for example, in the case where the relationship targeted for the estimation is {on, behind, hold}(be located on, be located behind, hold), in the example illustrated in FIG. 15, as the relationship between the curtain (curtain) and the cat (cat), the probability values, such as (0.1, 0.9, 0.2), with respect to each of the relationships are output. In addition, in this case, the specifying unit 22 is able to specify "behind" (be located behind) having the highest probability value as the relationship between the curtain (curtain) and the cat (cat).

The processes of estimating the relationship between the objects performed by the respective Attention maps 180 described above are collectively gathered as a specifying process of specifying the relationship between the plurality of persons performed by the specifying unit 22 by using the NN 40.

First, the specifying unit 22 extracts, from the video image, for example, a first feature value corresponding to a first region that includes an object included in a video image or a second region that includes a person included in the video image. Moreover, the video image may be a video image in which, for example, an inside of any type of facility, such as an inside of a store, has been captured by the camera device 100, and each of the first region and the second region may be a Bbox. Furthermore, such an extraction process corresponds to the process of extracting the image feature value 181 from the captured image 170 performed by the image feature extraction unit 41 as described above with reference to FIG. 11. In other words, in the example illustrated in FIG. 11, the captured image 170 corresponds to the video image, and the image feature value 181 corresponds to the first feature value.

Then, the specifying unit 22 detects the object and the person that are included in the video image from, for example, the extracted first feature value. Such a process of detecting the object and the person corresponds to the process of detecting the Bbox and the class of the object and the person from the image feature value 181 that corresponds to the first feature value performed by the object detection unit 42 as described above with reference to FIG. 12.

Then, the specifying unit 22 generates a second feature value corresponding to a combination of the first feature value held by the object or the person included in at least one of sets of, for example, the plurality of detected objects, the plurality of detected persons, and the object and the person. Such a generating process corresponds to a process of generating the pair feature value 182 that is performed by the pair feature value generation unit 43 described above with reference to FIG. 13, and in which each of the feature values of the detected object and the detected person corresponding to the respective first feature values are listed for each pair. In other words, in the example illustrated in FIG. 13, the pair feature value 182 corresponds to the second feature value.

Then, the specifying unit 22 generates, on the basis of, for example, the first feature value and the second feature value, a first map that indicates a first relationship indicating that at least one of interactions between the plurality of objects, the plurality of persons, and the object and the person has been identified. Such a generating process corresponds to the process of generating the Attention map 180 that has been described above with reference to FIG. 14, and that is performed by the relationship feature extraction unit 44 on the basis of the image feature value 181 corresponding to the first feature value and the pair feature value 182 corresponding to the second feature value. In other words, in the example illustrated in FIG. 14, the Attention map 180 corresponds to the first map.

Then, the specifying unit 22 extracts a fourth feature value on the basis of, for example, a third feature value that is obtained by transforming the first feature value and on the basis of, for example, the first map. Such an extraction process corresponds to the process of extracting the relationship feature value 183 that has been described above with reference to FIG. 14, and that is performed by the relationship feature extraction unit 44 on the basis of the feature value transformed by the transformation unit (2) and on the basis of the Attention map 180 corresponding to the first map. In other words, in the example illustrated in FIG. 14, the feature value transformed by the transformation unit (2) is the feature value that has been transformed from the image feature value 181 corresponding to the first feature value performed by the transformation unit (2), and that corresponds to the third feature value, whereas the relationship feature value 183 corresponds to the fourth feature value.

Then, the specifying unit 22 specifies from, for example, the fourth feature value, the relationship obtained by identifying the interaction between the plurality of persons included in the video image. Such a specifying process corresponds to the process of estimating and specifying the relationship (relation) between the object and the person from the relationship feature value 183 corresponding to the fourth feature value performed by the relationship estimation unit 45 as described above with reference to FIG. 15.

In addition, the specifying unit 22 specifies, on the basis of the video image acquired by the acquisition unit 21, from among the plurality of persons included in the video image, the first person indicating that the specified relationship between the plurality of persons is transitioned from the first relationship to the second relationship in time series.

Here, for example, the first relationship is the relationship that is set in the rule DB 16 and that indicates that an adult and a child are holding hands with each other, are walking together, are talking with each other, or the like. Furthermore, for example, although the second relationship may also be the same relationship as the first relationship, the second relationship indicates a relationship with an adult who is different from the adult indicated by the first relationship. In other words, the adult who indicates the first relationship is different from the adult who indicates the second relationship, so that the relationship is not transitioned to the second relationship, and the first person indicating that the relationship is transitioned from the first relationship to the second relationship in time series is a child. Accordingly, for example, the specifying unit 22 specifies, as the first person, the child who is indicated by the second relationship with respect to the adult who is different from the adult indicated by the first relationship. These descriptions described above correspond to an example of a case of an attempt to take the child away for an abduction.

In contrast, an example of a case of a stray child, for example, the first relationship is the relationship that is similarly to the example of a case of an attempt to take the child away for an abduction, and that indicates that an adult and a child are holding hands with each other, are walking together, are talking with each other, or the like. However, the second relationship is a relationship indicating that, for example, the first relationship has been cancelled out, and the child is present alone without the adult who was with the child before. In this case, for example, the specifying unit 22 specifies, as the first person, the child who indicates the first relationship with an adult by holding hands or the like and then indicates the second relationship in which the first relationship has been cancelled out, that is, specifies, as the first person, the child who indicates the relationship that is transitioned from the first relationship to the second relationship in time series.

Furthermore, the specifying process of specifying the first relationship and the second relationship may include a process of specifying a region that includes a child and a region that includes an adult and specifying the first relationship and the second relationship from the video image by inputting, for example, the video image acquired by the acquisition unit 21 to the machine learning model.

For example, by inputting the video image to the machine learning model, the specifying unit 22 specifies, from the video image, the first region that includes the child, the second region that includes the adult, and the first relationship in which the interaction between the child included in the first region and the adult included in the second region has been identified. Furthermore, by inputting the video image to the machine learning model, the specifying unit 22 specifies, from the video image, the third region that includes the child, the fourth region that includes the adult, and the second relationship in which the interaction between the child included in the third region and the adult included in the fourth region has been identified.

Furthermore, when the second relationship is specified, there may be a case in which an adult is not included in the video image in a case of a stray child. Accordingly, in this case, the fourth region need not be specified, and the second relationship may be the relationship in which the interaction between the child who is included in the third region and the adult who is included in the second region has been identified. In other words, by inputting the video image acquired by the acquisition unit 21 to the machine learning model, the specifying unit 22 specifies, from the video image, the third region that includes the child, and the second relationship in which the interaction between the child who is included in the third region and the adult who is included in the second region has been identified.

Moreover, by analyzing, for example, the scene graph, the specifying unit 22 is able to specify the first relationship and the second relationship, and is also able to specify the first person.

Moreover, the specifying unit 22 specifies the first area in which an abnormality has occurred between the plurality of persons on the basis of, for example, the camera device 100 that has captured the image. More specifically, the specifying unit 22 specifies the first area in which the abnormality has occurred between the plurality of persons from, for example, the installation location of the camera device 100 that has captured the video image in which the relationship between the plurality of persons has been specified and the image capturing range of the camera device 100.

Moreover, the specifying unit 22 generates skeleton information on the plurality of persons who are included in the video image by analyzing, for example, the video image acquired by the acquisition unit 21, and specifies, on the basis of the generated skeleton information, the relationship in which the interaction between the plurality of persons who are included in the video image has been identified. More specifically, the specifying unit 22 extracts a bounding box (Bbox) that encloses the region including a person by a rectangular box from, for example, the video image acquired by the acquisition unit 21. Then, the specifying unit 22 generates the skeleton information by inputting, for example, the image data on the extracted Bbox of the person to a trained machine learning model that has been built by using an existing algorithm, such as DeepPose or OpenPose.

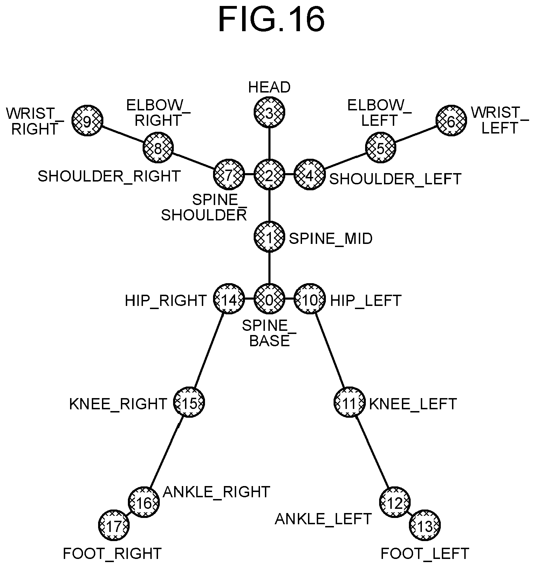

FIG. 16 is a diagram illustrating one example of the skeleton information according to the present embodiment. It is possible to use, for the skeleton information, 18 pieces (number 0 to number 17) of definition information that are obtained by numbering each of joints specified by a known skeleton model. For example, a right shoulder joint (SHOULDER_RIGHT) is indicated by number 7, a left elbow joint (ELBOW_LEFT)is indicated by number 5, a left knee joint (KNEE_LEFT) is indicated by number 11, and a right hip joint (HIP_RIGHT) is indicated by number 14. Therefore, it is possible to acquire 18 pieces of coordinate information on the skeleton illustrated in FIG. 16 from the image data, and, for example, "the X coordinates = X7, the Y coordinates = Y7, and the Z coordinates = Z7" are acquired as the position of the right shoulder joint indicated by number 7. Furthermore, for example, the Z-axis may be defined as a distance direction from the image capturing device to the target, the Y-axis may be defined as a height direction perpendicular to the Z-axis, and the X-axis may be defined as a horizontal direction.

Furthermore, the specifying unit 22 is able to determine, by using a machine learning model in which, for example, patterns of the skeletons are trained in advance, a pose of the entire body of a person, such as a pose of standing up, walking, squatting down, sitting down and lying down. For example, the specifying unit 22 is able to determine the most similar pose of the entire body by using a machine learning model that is obtained by training, by using Multilayer Perceptron, an angle formed between one of joints and the other joint that are defined as the skeleton information illustrated in FIG. 16 or a fine play drawing.

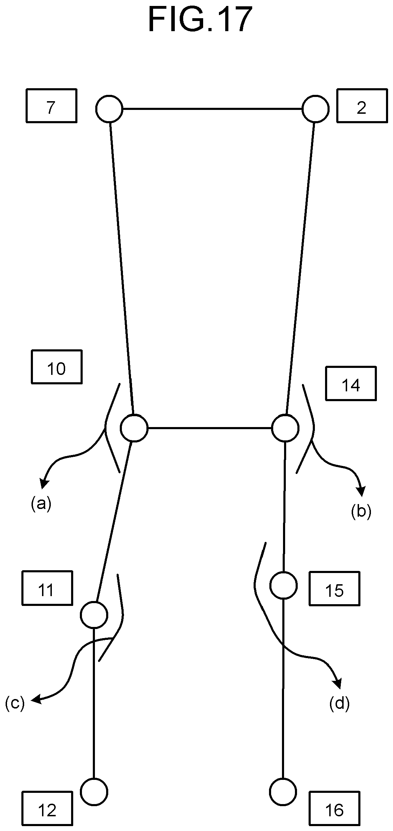

FIG. 17 is a diagram illustrating one example of the pose determination of the entire body according to the present embodiment. As illustrated in FIG. 17, the specifying unit 22 acquires, for example, an angle (a) formed between a joint of "HIP_LEFT" indicated by number 10 and the joint of "KNEE_LEFT" indicated by number 11, an angle (b) formed between the joint of "HIP_RIGHT" indicated by number 14 and a joint of "KNEE_RIGHT" indicated by number 15. Furthermore, the specifying unit 22 is able to detect the pose of the entire body of the person by acquiring, for example, an angle (c) of "KNEE_LEFT" indicated by number 11, an angle (d) of "KNEE_RIGHT" indicated by number 15, or the like.

Furthermore, the specifying unit 22 is also able to detect, for example, a motion of each part category by performing the pose determination on the parts on the basis of a 3D joint pose of a human body. More specifically, the specifying unit 22 is able to perform coordinate transformation from 2D joint coordinates to 3D joint coordinates by using, for example, an existing algorithm, such as a 3D-baseline method.

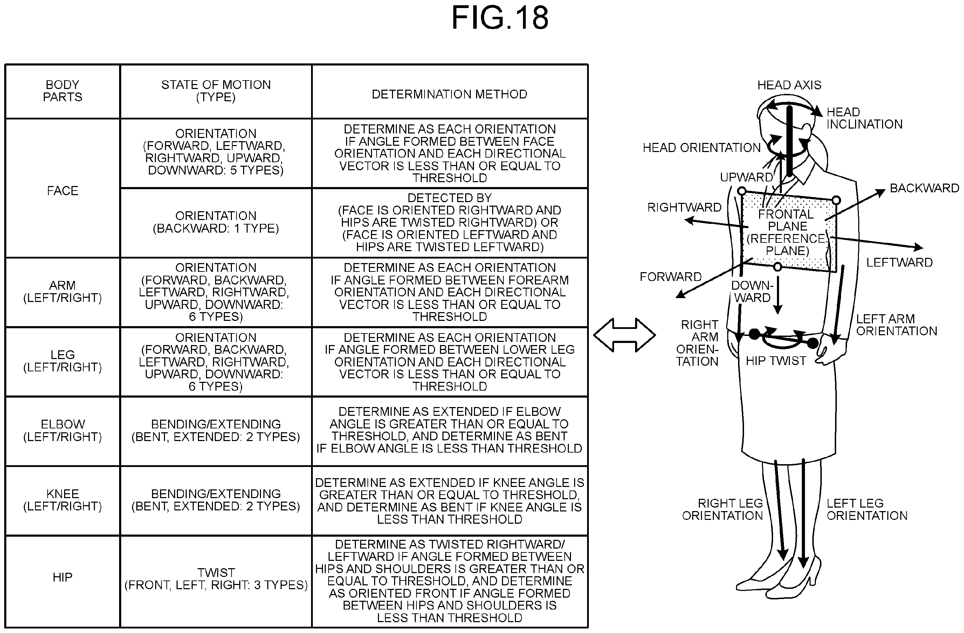

FIG. 18 is a diagram illustrating one example of detection of a part category motion according to the present embodiment. As illustrated in FIG. 18, regarding, for example, part "face", the specifying unit 22 is able to detect whether the face is oriented forward, leftward, rightward, upward, and downward (five types) on the basis of whether or not the angle formed between the face orientation and each of the directional vectors is equal to or less than a threshold. Moreover, the specifying unit 22 specifies the orientation of the face on the basis of the vector that is defined on condition that, for example, "the starting point is a midpoint of both ears and the end point is a nose". Furthermore, the specifying unit 22 is able to detect whether or not the face is oriented backward on the basis of whether, for example, "the face is oriented rightward and the hips are twisted rightward" or "the face is oriented leftward and the hips are twisted leftward".

Furthermore, for example, regarding the part "arm", the specifying unit 22 is able to detect whether each of the left and right arms is oriented forward, backward, leftward, rightward, upward, and downward (six types) on the basis of whether or not the angle formed between the forearm orientation and each of the directional vectors is equal to or less than a threshold. Moreover, the specifying unit 22 is able to detect the orientation of the arm on the basis of the vector that is defined on condition that, for example, "the starting point is an elbow and the end point is a wrist".

Furthermore, for example, regarding the part "leg", the specifying unit 22 is able to detect whether each of the left and right legs is oriented forward, backward, leftward, rightward, upward, and downward (six types) on the basis of whether or not the angle formed between the lower leg orientation and each of the directional vectors is equal to or less than a threshold. Moreover, the specifying unit 22 is able to detect the orientation of the lower leg on the basis of the vector that is defined on condition that, for example, "the starting point is a knee and the end point is an ankle".

Furthermore, for example, regarding the part "elbow", the specifying unit 22 is able to detect that the elbow is extended if the angle of the elbow is equal to or greater than a threshold and detect that the elbow is bent if the angle of the elbow is less than the threshold (2 types). Moreover, the specifying unit 22 is able to detect the angle of the elbow on the basis of the angle formed by a vector A that is defined on condition that, for example, "the starting point is an elbow and the end point is a shoulder" and a vector B that is defined on condition that, for example, "the starting point is an elbow and the end point is a wrist".

Furthermore, for example, regarding the part "knee", the specifying unit 22 is able to detect that the knee is extended when the angle of the knee is equal to or greater than a threshold and detect that the knee is bent when the angle of the knee is less than the threshold (2 types). Moreover, the specifying unit 22 is able to detect the angle of the knee on the basis of the angle formed by a vector A that is defined on condition that, for example, "the starting point is a knee and the end point is an ankle" and a vector B that is defined on condition that, for example, "the starting point is a knee and the end point is a hip".

Furthermore, for example, regarding the part "hip", the specifying unit 22 is able to detect a left twist and a right twist (two types) on the basis of whether or not the angle formed between each of the hips and the shoulders is equal to or greater than a threshold, and is able to detect a forward facing state is the angle formed between each of the hips and the shoulders is less than the threshold. Furthermore, the specifying unit 22 is able to detect the angle formed between each of the hips and the shoulders on the basis of the rotation angle around, for example, the axis vector C that is defined on condition that "the starting point is a midpoint of both hips and the end point is a midpoint of both shoulders". Moreover, the angle formed between each of the hips and the shoulders is detected on the basis of each of a vector A that is defined on condition that, for example, "the starting point is a left shoulder and the end point is a right shoulder" and a vector B that is defined on condition that, for example, "the starting point is a left hip (hip (L)) and the end point is a right hip (hip (R))".

Furthermore, the specifying unit 22 specifies, for example, positions of the plurality of persons included in each of the video images captured by the plurality of respective camera devices 100 by using a first index that is different for each of the plurality of camera devices 100. The first index is an image coordinate system in which, for example, the coordinates of a pixel located at an upper left of an image that corresponds to a single frame of the video image captured by each of the camera devices 100 is defined as the origin (0, 0). The image coordinate system is different for each of the plurality of camera devices 100, so that, even if each of the images captured by the plurality of respective camera devices 100 has the same coordinates, each of the images does not indicate the same position in a real space. Accordingly, the specifying unit 22 specifies, for example, the positions of the plurality of persons specified by the first index by a second index that is common to the plurality of camera devices 100. The second index is a coordinate system that is common among the plurality of camera devices 100 and that is obtained by transforming, for example, the image coordinate system corresponding to the first index by using a projective transformation (homography) coefficient, and, hereinafter, the image coordinate system is referred to as a "floor map coordinate system". The transformation from the image coordinate system to the floor map coordinate system will be more specifically described.

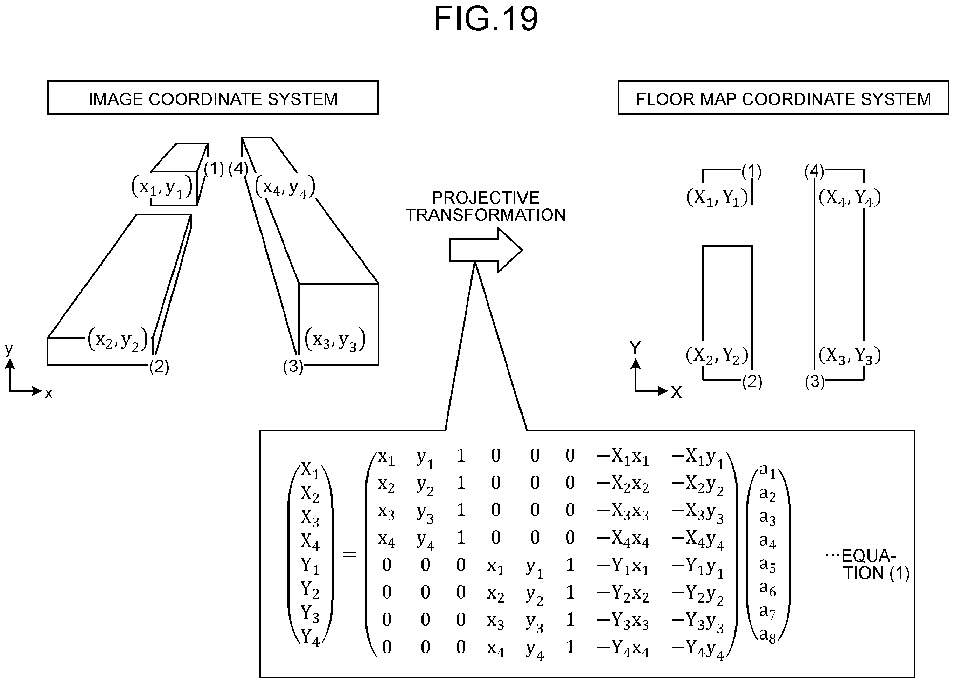

First, calculation of the projective transformation coefficient that is used for the transformation from the image coordinate system to the floor map coordinate system will be described. FIG. 19 is a diagram illustrating one example of calculation of the projective transformation coefficient according to the present embodiment. As illustrated in FIG. 19, the specifying unit 22 specifies, for example, arbitrary corresponding points (1) to (4) that correspond to the points between the image coordinate system and the floor map coordinate system. For example, the specifying unit 22 specifies, from the image coordinate system, a point (x₁, y₁), a point (x₂, y₂), a point (x₃, y₃), and a point (x₄, y₄). Similarly, for example, the specifying unit 22 specifies, from the floor map coordinate system, a point (X₁, Y₁), a point (X₂, Y₂), a point (X₃, Y₃), and a point (X₄, Y₄). Then, the specifying unit 22 calculates projective transformation coefficient aᵢ (i = 1 to 8) that is used for the projective transformation from, for example, the image coordinate system (x, y) to the floor map coordinate system (X, Y) by solving a simultaneous equations indicated by Equation (1) illustrated in FIG. 19. Moreover, in general, the arrangement configuration of each of the camera devices 100 and the configuration of each of the floors provided in an inside of any type of facility, such as an inside of a store, are fixed, so that a process of estimating the projective transformation coefficient is performed only one time. Furthermore, each of the corresponding points may be assigned by an administrator or the like of the information processing system 1, or, the points positioned at the same locations obtained from an image analysis may be specified as the corresponding points.

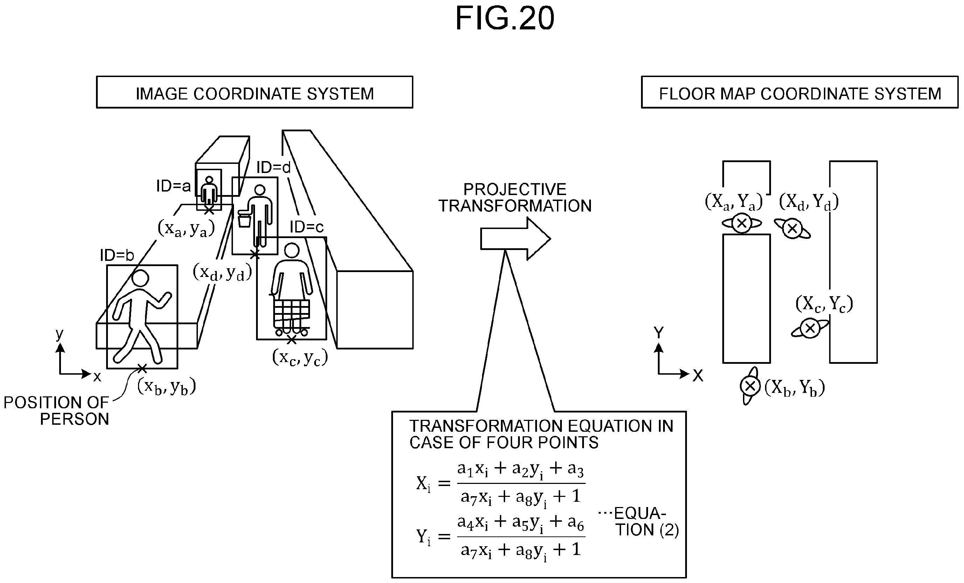

Then, the specifying unit 22 uses, for example, the calculated projective transformation coefficient, specifies the position of each of the plurality of persons specified by the image coordinate system by transforming the image coordinate system to the floor map coordinate system. FIG. 20 is a diagram illustrating one example of the transformation from the image coordinate system to the floor map coordinate system according to the present embodiment. As illustrated in FIG. 20, the specifying unit 22 calculates the floor map coordinates (X, Y) by defining, for example, the image coordinates (x, y) indicted at the bottom side of each of the Bboxes of the corresponding persons of the plurality of persons as the position of each of the persons specified by the image coordinate system, and by transforming the image coordinates to the floor map coordinates by using the projective transformation coefficient. Moreover, the floor map coordinates (X, Y) are the coordinates that indicate the position of each of the persons in the floor map coordinate system and that are common to the plurality of camera devices 100. In the example illustrated in FIG. 20, for example, each of points (xₐ, yₐ) to (x_{d}, y_{d}) that indicate the respective positions of the respective persons specified in the image coordinate system are transformed to respective points (Xₐ, Yₐ) to (X_{d}, Y_{d}) that indicate the respective positions of the respective persons in the floor map coordinate system by using a transformation equation indicated by Equation (2) illustrated in FIG. 20.

A description will be given here by referring back to FIG. 4. The determination unit 23 determines whether or not an abnormality has occurred between the plurality of persons outside the image capturing range of each of the camera devices 100 on the basis of, for example, the relationship in which the interaction between the plurality of persons who are included in the video image specified by the specifying unit 22 has been identified.

More specifically, for example, in the case where the first relationship between the adult and the child has been specified and then the second relationship with respect to the child has been specified by the specifying unit 22, the determination unit 23 determines that an abnormality has occurred between the adult and the child. On this point, for example, even if a decisive scene of an occurrence of an abnormality, such as a scene in which an adult and a child get separated from each other in a case of a stray child or a scene in which a child is pulled by force by an adult in a case of an abduction, is not captured by the camera device 100, it is possible to be determined that an abnormality has occurred. In this way, in also the case of an abnormality that has occurred outside the image capturing range of the camera device 100, the determination unit 23 is also able to determine that an abnormality on the basis of the relationship between the plurality of persons specified from the video images that are obtained before and after the occurrence of the abnormality.

Furthermore, the determination unit 23 determines, on the basis of, for example, the relationship that has been specified by the specifying unit 22 and in which the interaction between the plurality of persons who are included in the video image has been identified, whether or not an abnormality has occurred with respect to the first person between the plurality of persons outside the image capturing range of the camera device 100. Moreover, the first person is a person who has been specified by the specifying unit 22 and who is transitioned from the first relationship to the second relationship in time series.

Furthermore, the determination unit 23 determines, on the basis of, for example, the transition from the first relationship to the second relationship in time series, whether or not a stray child has occurred with respect to the first person between the plurality of persons outside the image capturing range of the camera device 100. For example, in the case where the first relationship that is the relationship in which an adult and a child hold hands with each other or the like, and in the case where the second relationship is a relationship in which the first relationship has been cancelled out and the child alone without the adult who was with the child before, it is determined that the stray child has occurred with respect to the child.

Furthermore, in the case where the child who has been specified by the specifying unit 22 from the video image and who is included in the first region is the same child who is included in the third region, the determination unit 23 compares both the first relationship and the second relationship that has been specified by the specifying unit 22 with the rule that has been set in advance. Here, the rule that has been set in advance may be the rule that is set in, for example, the rule DB 16. Then, the determination unit 23 determines, on the basis of, for example, a comparison result obtained by comparing both the first relationship and the second relationship with the rule that has been set in advance, whether or not an abnormality has occurred with respect to the same child between the plurality of persons outside the image capturing range of the camera device 100.

Furthermore, the determination unit 23 determines, on the basis of, for example, the positions of the plurality of persons specified by the specifying unit 22 using the second index, for each plurality of person, whether or not each of the plurality of persons included in the video images is the same person. For example, the second index is the floor map coordinate system that is common to the plurality of camera devices 100. Accordingly, for example, in the case where a floor map coordinate system indicated by the position of the person who is included in each of the video images captured by the plurality of camera devices 100 is located within the same range or is located in the vicinity in a predetermined range, the determination unit 23 is able to determine the person included in each of the video images is the same person.

A description will be given here by referring back to FIG. 4. The notification unit 24 notifies an alert indicating that, for example, an abnormality has occurred between the plurality of persons. The alert may be notified in the case where it is determined, on the basis of, for example, the relationship in which the interaction between the plurality of persons included in the video image has been determined, by the determination unit 23 that an abnormality has occurred between the plurality of persons outside the image capturing range of the camera device 100. Furthermore, the alert may be, for example, an output of a sound, a message notification displayed on a screen, or the like. Furthermore, the notification destination of the alert may be, for example, an output device provided by the information processing apparatus 10, may be an external device, may be another output device that is connected so as to be able to communicate with the information processing apparatus 10 via the network 50, or the like.

Furthermore, the notification unit 24 notifies an alert indicating that an abnormality has occurred with respect to the first object by associating the alert with, for example, the first area. Moreover, the first area is an area that has been specified by the specifying unit 22 as an area in which, for example, an abnormality has possibly occurred between the plurality of persons. Furthermore, in the alert, for example, information related to the position of the first area may be included.

### Flow of process

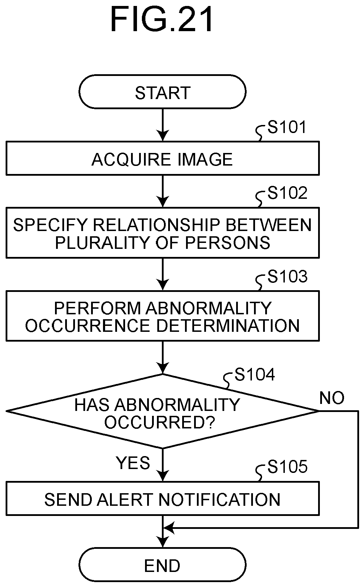

In the following, the flow of an abnormality occurrence determination process performed by the information processing apparatus 10 will be described. FIG. 21 is a flowchart illustrating the flow of the abnormality occurrence determination process according to the present embodiment.

First, as illustrated in FIG. 21, the information processing apparatus 10 acquires a video image, in which a predetermined image capturing range of an inside of any type of facility, such as an inside of a store, has been captured by, for example, the camera device 100 from the captured image DB 13 (Step S101). Moreover, the video image that has been captured by the camera device 100 is transmitted from the camera device 100 to the information processing apparatus 10 as needed, and is then stored in the captured image DB 13.

Then, the information processing apparatus 10 specifies, by inputting the video image acquired at, for example, Step S101 to the machine learning model, from the video image, the region that includes the person and the relationship between the plurality of persons (Step S102). Moreover, the region that includes the person may be, for example, a bounding box (Bbox) that encloses the person included in the video image by a rectangular box. Furthermore, the relationship between the plurality of persons may be a relationship in which, for example, an adult and a child are holding hands with each other, walking together, talking with each other, or the like.

Then, the information processing apparatus 10 determines, on the basis of, for example, the relationship between the plurality of persons specified at Step S102, whether or not an abnormality has occurred between the plurality of persons (Step S103). Moreover, the abnormal behavior mentioned here is, for example, a stray child, an abduction, or the like, and may include a stray child, an abduction, or the like occurred outside the image capturing range of the camera device 100. If it is determined that an abnormality does not occur between the plurality of persons (No at Step S104), the abnormality occurrence determination process illustrated in FIG. 21 has been completed.

In contrast, if it is determined that an abnormality has occurred between the plurality of persons (Yes at Step S104), the information processing apparatus 10 notifies, for example, an alert (Step S105). After the process at Step S105 has been performed, the abnormality occurrence determination process illustrated in FIG. 21 has been completed.

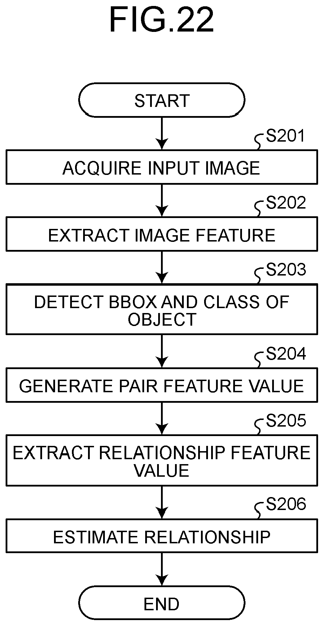

In the following, the flow of a relationship estimation process performed by the information processing apparatus 10 will be described. FIG. 22 is a flowchart illustrating the relationship estimation process according to the present embodiment. The relationship estimation process illustrated in FIG. 22 is the estimation process of estimating the relationship between the object and the person performed by using the NN 40 described with reference to, for example, FIGS. 10 to 15.

First, the information processing apparatus 10 acquires the video image, in which a predetermined image capturing range of an inside of any type of facility, such as an inside of a store, has been captured by, for example, the camera device 100, that is the input image, from the captured image DB 13 (Step S201). Moreover, the input image includes an image corresponding to an amount of a single frame of the video image, and, in the case where the input image is stored as a video image in the captured image DB 13, the information processing apparatus 10 acquires the single frame as the input image from the corresponding video image.

Then, the information processing apparatus 10 extracts the image feature value 181 as the image feature of the subject input image from the input image that has been acquired at, for example, Step S201 (Step S202).

Then, the information processing apparatus 10 uses, for example, an existing technology, and detects the Bbox that indicates the location of each of the objects that are included in the video image and the class that indicates the type of each of the objects from the image feature value 181 extracted at Step S202 (Step S203). Moreover, a person may be included in each of the objects that are detected here, and, in also a description below, a person may be included in each of the objects.

Then, the information processing apparatus 10 generates, for example, as the pair feature value 182, the second feature value in combination with the first feature value held by each of the objects associated with the respective pairs of the objects detected at Step S203 (Step S204).

Then, the information processing apparatus 10 combines, for example, the feature value that is extracted by the Attention map 180 and that is an important region with respect to the relationship estimation with the pair feature value 182, and then extracts the relationship feature value 183 (Step S205). Moreover, the Attention map 180 is generated from the pair feature value 182 that has been extracted at Step S204.

Then, on the basis of, for example, relationship feature value 183 extracted at Step S205, the information processing apparatus 10 estimates the relationship between each of the objects that have been detected from the image (Step S206). Moreover, the estimation of the relationship may be, for example, calculation of a probability value for each type of the relationship. After the process performed at Step S206, the relationship estimation process illustrated in FIG. 22 has been completed.

### Effects

As described above, the information processing apparatus 10 acquires a video image that has been captured by each of one or more of the camera devices 100, specifies, by analyzing the acquired video image, a relationship in which an interaction between a plurality of persons who are included in the video image has been identified, and determines, on the basis of the specified relationship, whether or not an abnormality has occurred between the plurality of persons outside the image capturing range of each of the camera devices 100.

In this way, the information processing apparatus 10 specifies the relationship between the plurality of persons from the video image, and determines, on the basis of the specified relationship, whether or not an abnormality has occurred between the plurality of persons outside the image capturing range of each of the camera devices 100. As a result of this, the information processing apparatus 10 is able to more accurately determine that an abnormality has occurred between the plurality of persons from the video image.

Furthermore, the information processing apparatus 10 specifies, on the basis of the acquired video image, from among the plurality of persons, a first person indicating that the specified relationship is transitioned from a first relationship to a second relationship in time series, and the process of determining, performed by the information processing apparatus 10, whether or not the abnormality has occurred includes a process of determining, on the basis of the specified relationship, whether or not an abnormality has occurred with respect to the first person between the plurality of persons outside the image capturing range of each of the camera devices 100.

As a result of this, the information processing apparatus 10 is able to more accurately determine that an abnormality has occurred between the plurality of persons from the video image.

Furthermore, the process of specifying the relationship performed by the information processing apparatus 10 includes a process of specifying, from the video image, by inputting the acquired video image to a machine learning model, a first region that includes a child, a second region that includes an adult, and the first relationship in which an interaction between the child included in the first region and the adult included in the second region has been identified, and a process of specifying, from the video image, by inputting the acquired video image to the machine learning model, a third region that includes a child, a fourth region that includes an adult, and the second relationship in which an interaction between the child included in the third region and the adult included in the fourth region has been identified, and the process of determining, performed by the information processing apparatus 10, includes a process of determining, when the child included in the first region and the child included in the third region are the same, whether or not an abnormality has occurred with respect to the same child between the plurality of persons outside the image capturing range of each of the camera devices 100 by comparing both the specified first relationship and the specified second relationship with a rule that is set in advance.

As a result of this, the information processing apparatus 10 is able to more accurately notify that an abnormality has occurred between the plurality of persons from the video image.

Furthermore, the process of specifying the relationship performed by the information processing apparatus 10 includes a process of specifying, from the video image, by inputting the acquired video image to a machine learning model, a first region that includes a child, a second region that includes an adult, the first relationship in which an interaction between the child included in the first region and the adult included in the second region has been identified, and a process of specifying, from the video image, by inputting the acquired video image to the machine learning model, a third region that includes a child, and the second relationship in which an interaction between the child included in the third region and the adult included in the second region has been identified, and the process of determining, performed by the information processing apparatus 10, includes a process of determining, when the child included in the first region and the child included in the third region are the same, whether or not an abnormality has occurred with respect to the same child between the plurality of persons outside the image capturing range of each of the camera devices 100 by comparing both the specified first relationship and the specified second relationship with a rule that is set in advance.

As a result of this, the information processing apparatus 10 is able to more accurately determine that an abnormality has occurred between the plurality of persons from the video image.

Furthermore, the information processing apparatus 10 specifies, on the basis of each of the camera devices 100 that captures the video image, a first area in which an abnormality has occurred between the plurality of persons, and notifies an alert indicating that the abnormality has occurred between the plurality of persons by associating the alert with the first area.

As a result of this, the information processing apparatus 10 is able to more accurately notify that an abnormality has occurred between the plurality of persons from the video image.

Furthermore, the information processing apparatus 10 specifies, on the basis of the acquired video image, from among the plurality of persons, a first person indicating that the specified relationship is transitioned from a first relationship to a second relationship in time series, and the process of determining, performed by the information processing apparatus 10, whether or not the abnormality has occurred includes a process of determining, on the basis of the transition from the first relationship to the second relationship in time series, whether or not a stray child has occurred with respect to the first person between the plurality of persons outside the image capturing range of each of the camera devices 100.

As a result of this, the information processing apparatus 10 is able to more accurately determine that an abnormality has occurred between the plurality of persons from the video image.

Furthermore, the process of specifying, performed by the information processing apparatus 10, the first person includes a process of generating a scene graph in which the relationship has been specified with respect to each of the persons included in the video image by inputting the acquired video image to the machine learning model, and a process of specifying the first person by analyzing the scene graph.

As a result of this, the information processing apparatus 10 is able to more accurately determine that an abnormality has occurred between the plurality of persons from the video image.

Furthermore, the process of specifying, performed by the information processing apparatus 10, the relationship includes a process of extracting, from the video image, a first feature value associated with an object or each of the persons between the plurality of persons included in the video image, a process of detecting, from the extracted first feature value, the object and each of the persons included in the video image, a process of generating a second feature value in combination with the first feature value that is held by the object or each of the persons included in at least one of sets of the plurality of detected objects, the plurality of detected persons, and the detected object and each of the persons, a process of generating, on the basis of on the first feature value and the second feature value, a first map that indicates the first relationship in which at least one of interactions between the plurality of objects, the plurality of persons, and the object and each of the persons has been identified, a process of extracting a fourth feature value on the basis of a third feature value that is obtained by transforming the first feature value and on the basis of the first map, and a process of specifying the relationship from the fourth feature value.

As a result of this, the information processing apparatus 10 is able to more accurately determine that an abnormality has occurred between the plurality of persons from the video image.

Furthermore, the process of specifying, performed by the information processing apparatus 10, the relationship includes a process of generating skeleton information on the plurality of persons by analyzing the acquired video image, and a process of specifying the relationship on the basis of the generated skeleton information.

As a result of this, the information processing apparatus 10 is able to more accurately determine that an abnormality has occurred between the plurality of persons from the video image.

Furthermore, the information processing apparatus 10 specifies positions of the plurality of persons included in each of the video images captured by the plurality of respective camera devices 100 by using a first index that is different for each of the plurality of camera devices 100, specifies the positions of the plurality of persons specified by the first index by using a second index that is common to the plurality of camera devices 100, and determines, for each of the plurality of persons, on the basis of the positions of the plurality of persons specified by using the second index, whether or not the plurality of persons included in each of the video images are the same person.

As a result of this, the information processing apparatus 10 is able to more accurately determine that an abnormality has occurred between the plurality of persons from the video image.

Furthermore, the information processing apparatus 10 acquires biometric information on a person who passes through a gate on the basis of detection of the biometric information on the person obtained by a sensor or a camera that is arranged at a predetermined position in a facility, identifies, when authentication performed on the basis of the acquired biometric information on the person has succeeded, by analyzing an image that includes the person who passes through the gate, the person included in the image as a person who has checked in the facility, and tracks the plurality of persons while being associated with identification information on the person specified from the biometric information.

As a result of this, the information processing apparatus 10 is able to more accurately determine that an abnormality has occurred between the plurality of persons from the video image.

Furthermore, the facility is a store and the gate is arranged at an entrance of the store, and, when the acquired biometric information on the person has been registered as a target for a member of the store, the information processing apparatus 10 determines that the authentication performed on the basis of the biometric information on the person has succeeded.

As a result of this, the information processing apparatus 10 is able to more accurately determine that an abnormality has occurred between the plurality of persons from the video image.

Furthermore, the facility is one of a railroad facility and an airport, and the gate is arranged at a ticket barrier of the railroad facility or a counter of the airport, and, furthermore, the information processing apparatus 10 determines that the authentication performed on the basis of the biometric information on the person has succeeded, when the acquired biometric information on the person has already been registered in advance as a target for a passenger of a railroad or an airplane.

As a result of this, the information processing apparatus 10 is able to more accurately determine that an abnormality has occurred between the plurality of persons from the video image.

Furthermore, the information processing apparatus 10 tracks the plurality of persons present in the facility in a state in which the relationship between the plurality of persons has been identified.

As a result of this, the information processing apparatus 10 is able to more accurately determine that an abnormality has occurred between the plurality of persons from the video image.

### Application example

In the following, an application example will be described by referring back to FIG. 1. The information processing apparatus 10 is able to analyze a behavior of a checked in person by using the images captured by the plurality of camera devices 100. The facility is a railroad facility, an airport, a store, or the like. Furthermore, a gate arranged in the facility in this case is arranged at the entrance of the store, a ticket barrier of the railroad facility, a counter of the airport, or the like.

First, an example in which a target for a check in is a railroad facility, or an airport will be described. In a case of a railroad facility or an airport, a gate is arranged in the railroad facility or arranged at a boarding gate of the airport. At this time, in the case where biometric information on a person has already been registered in advance as a target for a passenger of the railroad or the airplane, the information processing apparatus 10 determines that authentication performed on the basis of the biometric information on the person has succeeded.

In addition, an example in which a target for a check in is a store will be described. In a case of a store, a gate is arranged at the entrance of the store. At this time, in the case where biometric information on a person has been registered, as a target for a member of the store as a check in, the information processing apparatus 10 determines that authentication performed on the basis of the biometric information on the person has succeeded.

Here, a detail of the check in will be described. The information processing apparatus 10 performs authentication by acquiring, for example, a vein image or the like that has been acquired by a vein sensor from a biometric sensor. By doing so, the information processing apparatus 10 specifies an ID, a name, and the like of the target person to be checked in. At this time, the information processing apparatus 10 acquires an image of the target person to be checked in by using the information processing apparatus 10. Then, the information processing apparatus 10 detects the person from the image. The information processing apparatus 10 tracks the person who has been detected from the images captured by the plurality of camera devices 100 between the frames. At this time, the information processing apparatus 10 associates the ID and the name of the target person to be checked in with the person to be tracked.

Here, an application example will be described by referring back to FIG. 2. The information processing apparatus 10 acquires the biometric information on the person who passes through the gate that is arranged at a predetermined position in the store when the person checks in. Specifically, the information processing apparatus 10 performs authentication by acquiring a vein image or the like that has been acquired by a biometric sensor, that is, for example, a vein sensor, that is installed in a gate that is arranged at the entrance provided in an inside of the store from the biometric sensor. At this time, the information processing apparatus 10 specifies the ID and the name that has been associated with the biometric information. The information processing apparatus 10 specifies the IDs and the names of the person P and the person C from the biometric information. Then, the information processing apparatus 10 specifies, by using the specified IDs and the names, that the person P and the person C are a parent and a child.

Furthermore, the biometric sensor is installed in the gate that is arranged at the predetermined position of the facility, and detects the biometric information on the person who passes through the gate. Furthermore, the plurality of camera devices 100 are arranged on the ceiling of the store. Furthermore, the information processing apparatus 10 may perform authentication by acquiring the biometric information obtained from a face image that has been captured by each of the cameras, instead of the biometric sensor, mounted on the gate that is arranged at the entrance provided in an inside of the store.

Then, the information processing apparatus 10 determines whether or not authentication performed on the basis of the biometric information on the person has succeeded. In the case where the authentication has succeeded, the information processing apparatus 10 identifies the person included in the image as the person who has checked in the facility by analyzing the image that includes the person who passes through the gate. Then, the information processing apparatus 10 stores the identification information on the person who is specified from the biometric information and the identified person in an associated manner in a storage unit.

After that, the information processing apparatus 10 tracks a plurality of persons while being associated with the identification information on the person specified from the biometric information. Specifically, the information processing apparatus 10 stores the ID and the name of the target person to be checked in and the identified person in an associated manner. Furthermore, the information processing apparatus 10 analyzes the video images acquired by the plurality of camera devices 100, and tracks the identified person while maintaining the identified state in which the person P and the person C are the parent and the child. As a result of this, when the person C and the person P are separated from each other, the information processing apparatus 10 is able to detect that the person C becomes lost after being separated from the person P.

### System

The flow of the processes, the control procedures, the specific names, and the information containing various kinds of data or parameters indicated in the above specification and drawings can be arbitrarily changed unless otherwise stated. Furthermore, specific examples, distributions, numerical values, and the like described in the embodiment are only examples and can be arbitrarily changed.

Furthermore, the specific shape of a separate or integrated device is not limited to the drawings. In other words, all or part of the device can be configured by functionally or physically separating or integrating any of the units in accordance with various loads or use conditions. In addition, all or any part of each of the processing functions performed by the each of the devices can be implemented by a CPU and by programs analyzed and executed by the CPU or implemented as hardware by wired logic.

### Hardware

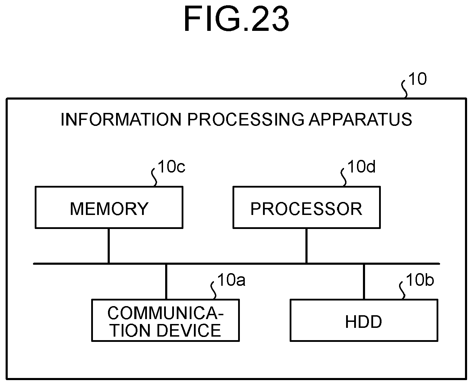

FIG. 23 is a diagram illustrating an example of a hardware configuration of the information processing apparatus 10. As illustrated in FIG. 23, the information processing apparatus 10 includes a communication device 10a, a hard disk drive (HDD) 10b, a memory 10c, and a processor 10d. Furthermore, each of the units illustrated in FIG. 23 is connected each other via a bus or the like.

The communication device 10a is a network interface card or the like, and communicates with another server. The HDD 10b stores therein programs or the DB that operates the function illustrated in FIG. 4.

The processor 10d is a hardware circuit that operates the process that executes each of the functions described above in FIG. 4 or the like by reading the programs that execute the same process as that performed by each of the processing units illustrated in FIG. 4 from the HDD 10b or the like and loading the read programs in the memory 10c. In other words, the process executes the same function as that performed by each of the processing units included in the information processing apparatus 10. Specifically, the processor 10d reads, from the HDD 10b or the like, the programs having the same functions as those performed by the acquisition unit 21, the specifying unit 22, the determination unit 23, the notification unit 24, and the like. Then, the processor 10d executes the processes that executes the same processes as those performed by the specifying unit 22 and the like.

In this way, the information processing apparatus 10 is operated as an information processing apparatus that executes an operation control process by reading and executing the programs that execute the same process as that performed by each of the processing units illustrated in FIG. 4. Furthermore, the information processing apparatus 10 is also able to implement the same function as that described above in the embodiment by reading the programs from a recording medium by a medium reading device and executing the read programs. In addition, the programs described in another embodiment are not limited to be executed by the information processing apparatus 10. For example, the present embodiment may also be similarly used in a case in which another information processing apparatus executes the program, or in a case in which the information processing apparatus 10 and another information processing apparatus cooperatively execute the program with each other.

Furthermore, the programs that execute the same process as those performed by each of the processing units illustrated in FIG. 4 can be distributed via a network, such as the Internet. Furthermore, the programs can be executed by storing the programs in a recording medium that can be read by a computer readable medium, such as a hard disk, a flexible disk (FD), a CD-ROM, a magnetooptical disk (MO), a digital versatile disk (DVD), or the like, and read the programs from the recording medium by the computer.

According to an aspect of one embodiment, it is possible to more accurately determine that an abnormality has occurred between a plurality of persons from a video image.

## Claims

1. An information processing program that causes a computer (10) to execute a process comprising:
acquiring (21) a video image captured by each of one or more camera devices;
specifying (22), by analyzing the acquired video image, a relationship in which a behavior between a plurality of persons who are included in the video image has been identified; and
determining (23), based on the specified relationship, whether or not an abnormality has occurred between the plurality of persons outside the image capturing range of each of the camera devices.

2. The information processing program according to claim 1, wherein the process further includes:
specifying (22), based on the acquired video image, from among the plurality of persons, a first person indicating that the specified relationship is transitioned from a first relationship to a second relationship in time series, wherein
the determining (23) whether or not the abnormality has occurred includes determining, based on the specified relationship, whether or not an abnormality has occurred with respect to the first person between the plurality of persons outside the image capturing range of each of the camera devices.

3. The information processing program according to claim 1 or 2, wherein
the specifying the relationship (22) includes
specifying, from the video image, by inputting the acquired video image to a machine learning model, a first region that includes a child, a second region that includes an adult, and the first relationship in which an interaction between the child included in the first region and the adult included in the second region has been identified, and
specifying (22), from the video image, by inputting the acquired video image to the machine learning model, a third region that includes a child, a fourth region that includes an adult, and the second relationship in which an interaction between the child included in the third region and the adult included in the fourth region has been identified, and
the determining (23)
whether or not the abnormality has occurred includes determining, when the child included in the first region and the child included in the third region are the same, whether or not an abnormality has occurred with respect to the same child between the plurality of persons outside the image capturing range of each of the camera devices by comparing both the specified first relationship and the specified second relationship with a rule that is set in advance.

4. The information processing program according to claim 1 or 2, wherein
the specifying the relationship (22) includes
specifying, from the video image, by inputting the acquired video image to a machine learning model, a first region that includes a child, a second region that includes an adult, the first relationship in which an interaction between the child included in the first region and the adult included in the second region has been identified, and
specifying (22), from the video image, by inputting the acquired video image to the machine learning model, a third region that includes a child, and the second relationship in which an interaction between the child included in the third region and the adult included in the second region has been identified, and
the determining whether or not the abnormality has occurred (23) includes determining, when the child included in the first region and the child included in the third region are the same, whether or not an abnormality has occurred with respect to the same child between the plurality of persons outside the image capturing range of each of the camera devices by comparing both the specified first relationship and the specified second relationship with a rule that is set in advance.

5. The information processing program according to claim 1 or 2, wherein the process further includes:
specifying (22), based on each of the camera devices that capture the video image, a first area in which an abnormality has occurred between the plurality of persons, and
notifying (24) an alert indicating that the abnormality has occurred between the plurality of persons by associating the alert with the first area.

6. The information processing program according to claim 1, wherein the process further includes:
Specifying (22), based on the acquired video image, from among the plurality of persons, a first person indicating that the specified relationship is transitioned from a first relationship to a second relationship in time series, wherein
the determining whether or not the abnormality has occurred (23) includes determining, based on the transition from the first relationship to the second relationship in time series, whether or not a stray child has occurred with respect to the first person between the plurality of persons outside the image capturing range of each of the camera devices.

7. The information processing program according to claim 2 or 6, wherein
the specifying the first person (22) includes
generating a scene graph in which the relationship has been specified with respect to each of the persons included in the video image by inputting the acquired video image to the machine learning model, and
specifying the first person by analyzing the scene graph.

8. The information processing program according to claim 1, or 2, wherein
the specifying the relationship (22) includes
extracting, from the video image, a first feature value associated with an object or each of the persons between the plurality of persons included in the video image,
detecting, from the extracted first feature value, the object and each of the persons included in the video image,
generating a second feature value in combination with the first feature value that is held by the object or each of the persons included in at least one of sets of the plurality of detected objects, the plurality of detected persons, and the detected object and each of the persons,
generating, based on the first feature value and the second feature value, a first map that indicates the first relationship in which at least one of interactions between the plurality of objects, the plurality of persons, and the object and each of the persons has been identified,
extracting a fourth feature value based on a third feature value that is obtained by transforming the first feature value and based on the first map, and
specifying the relationship from the fourth feature value.

9. The information processing program according to claim 1 or 2, wherein
the specifying the relationship (22) includes
generating skeleton information on the plurality of persons by analyzing the acquired video image, and
specifying the relationship based on the generated skeleton information.

10. The information processing program according to claim 1 or 2, wherein the process further includes:
specifying (22) positions of the plurality of persons included in each of the video images captured by the plurality of respective camera devices by using a first index that is different for each of the plurality of camera devices,
specifying (22) the positions of the plurality of persons specified by the first index by using a second index that is common to the plurality of camera devices, and
determining (23), for each of the plurality of persons, based on the positions of the plurality of persons specified by using the second index, whether or not the plurality of persons included in each of the video images are the same person.

11. The information processing program according to claim 1, wherein the process further includes:
acquiring a first video image captured by a first camera device and a second video image captured by a second camera device which monitors an area different from an area monitored by the first camera device;
specifying, by analyzing the first video, a first relationship in which a behavior between a plurality of persons who are included in the first video image;
specifying, by analyzing the second video, a second relationship in which a behavior between the plurality of persons who are included in the second video image;
when judging that the first video and the second video includes a same person based on results of analyzing the first video and the second video, determining, based on the first relationship and the second relationship, whether or not an abnormality has occurred between the plurality of persons in an area outside a range monitored by a first camera device and a second camera device; and
when determining that the abnormality has occurred, outputting an alert.

12. An information processing method carried out by a computer, comprising:
acquiring (S101) a video image captured by each of one or more camera devices;
specifying (S102), by analyzing the acquired video image, a relationship in which a behavior between a plurality of persons who are included in the video image has been identified; and
determining (S103), based on the specified relationship, whether or not an abnormality has occurred between the plurality of persons outside the image capturing range of each of the camera devices.

13. An information processing apparatus comprising:
a control unit (10) configured to execute a process including:
acquiring (21) a video image captured by each of one or more camera devices;
specifying (22), by analyzing the acquired video image, a relationship in which a behavior between a plurality of persons who are included in the video image has been identified; and
determining (23), based on the specified relationship, whether or not an abnormality has occurred between the plurality of persons outside the image capturing range of each of the camera devices.
